(19) Europäisches Patentamt / European Patent Office / Office européen des brevets

(11) **EP 4 171 806 B1**

## (12) FASCICULE DE BREVET EUROPEEN

(45) Date de publication et mention
de la délivrance du brevet:
**15.05.2024 Bulletin 2024/20**

(21) Numéro de dépôt: **21732337.7**

(22) Date de dépôt: **18.06.2021**

(51) Classification Internationale des Brevets (IPC):
***B01J 27/19*** (2006.01)     ***B01J 37/20*** (2006.01)
***C10G 45/08*** (2006.01)     ***C10G 45/50*** (2006.01)
***C10G 47/12*** (2006.01)

(52) Classification Coopérative des Brevets (CPC):
**B01J 27/19; B01J 37/0203; B01J 37/20;
C10G 45/08; C10G 45/50; C10G 47/12;
B01J 23/8885**

(86) Numéro de dépôt international:
**PCT/EP2021/066614**

(87) Numéro de publication internationale:
**WO 2022/002641 (06.01.2022 Gazette 2022/01)**

(54) **CATALYSEUR TRIMETALLIQUE A BASE DE NICKEL, MOLYBDENE ET TUNGSTENE ET SON UTILISATION DANS UN PROCEDE D'HYDROTRAITEMENT ET/OU D'HYDROCRAQUAGE**

TRIMETALLKATALYSATOR AUS NICKEL, MOLYBDÄN UND WOLFRAM UND DESSEN VERWENDUNG IN EINEM HYDROBEHANDLUNGS- UND/ODER HYDROCRACKVERFAHREN

TRIMETALLIC CATALYST MADE FROM NICKEL, MOLYBDENUM AND TUNGSTEN AND USE THEREOF IN A HYDROTREATMENT AND/OR HYDROCRACKING PROCESS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.06.2020 FR 2006796**

(43) Date de publication de la demande:
**03.05.2023 Bulletin 2023/18**

(73) Titulaire: **IFP Energies nouvelles
92500 Rueil-Malmaison (FR)**

(72) Inventeurs:
• **GIRARD, Etienne
92852 RUEIL-MALMAISON CEDEX (FR)**

• **BONDUELLE, Audrey
92852 RUEIL-MALMAISON CEDEX (FR)**

(74) Mandataire: **IFP Energies nouvelles
Département Propriété Industrielle
Rond Point de l'échangeur de Solaize
BP3
69360 Solaize (FR)**

(56) Documents cités:
**WO-A1-2020/002135**     **FR-A1- 3 083 142**
**US-B2- 8 697 598**

**Description**

**Domaine technique**

L'invention concerne un catalyseur trimétallique à base de nickel, molybdène et tungstène, sa méthode de préparation et son utilisation dans le domaine de l'hydrotraitement et/ou de l'hydrocraquage.

Les catalyseurs d'hydrotraitement classiques comprennent généralement un support d'oxyde et une phase active à base de métaux des groupes VIB et VIII sous leurs formes oxydes ainsi que du phosphore. La préparation de ces catalyseurs comprend généralement une étape d'imprégnation des métaux et du phosphore sur le support, suivie d'un séchage et d'une calcination permettant d'obtenir la phase active sous leurs formes oxydes. Avant leur utilisation dans une réaction d'hydrotraitement et/ou d'hydrocraquage, ces catalyseurs sont généralement soumis à une sulfuration afin de former l'espèce active.

L'ajout d'un composé organique sur les catalyseurs d'hydrotraitement pour améliorer leur activité a été préconisé par l'Homme du métier, notamment pour des catalyseurs qui ont été préparés par imprégnation suivie d'un séchage sans calcination ultérieure. Ces catalyseurs sont souvent appelés «catalyseurs séchés additivés».

Habituellement, un catalyseur d'hydrotraitement de coupes hydrocarbonées a pour but d'éliminer les composés soufrés, azotés ou aromatiques contenus dans celles-ci afin de mettre par exemple un produit pétrolier aux spécifications requises (teneur en soufre, teneur en aromatiques etc...) pour une application donnée (carburant automobile, essence ou gazole, fioul domestique, carburéacteur).

En raison du resserrement de la législation sur la qualité de l'air dans de nombreux pays, des efforts continus sont déployés pour développer des catalyseurs et des procédés plus efficaces pour la productions de carburants à faible teneur en soufre, en particulier le diesel. Bien que de grand progrès aient été réalisées dans le développement de catalyseurs efficaces pour ces procédés, des défis majeurs demeurent, par exemple, leur modeste activité de saturation en hydrocarbures aromatiques. L'amélioration de l'activité de saturation aromatique des catalyseurs d'hydrotraitement est devenue un priorité de recherche depuis que les récents restrictions environnementales établissent des valeurs minimales pour l'indice de cétane et des limites inférieures pour les teneurs en polyaromatiques dans les coupes diesel.

Les catalyseurs trimétalliques à base de nickel, molybdène et tungstène sont connus pour augmenter non seulement l'hydrodésulfuration (HDS), l'hydrodéazotation (HDN) mais également l'hydrogénation des aromatiques (HDA).

On trouve par exemple des documents décrivant des catalyseurs massiques trimétalliques NiMoW, avec une faible teneur en liant (US 6,162,350, US 6,299,760, WO00/41810, US 6,566,296 ou encore US2017/0165644). Ces catalyseurs, aussi appelé catalyseurs « bulk » selon la terminologie anglo-saxonne, ne comportent pas de support. Bien que ces catalyseurs présentent une forte activité en hydrotraitement, ils présentent les désavantages d'être très coûteux (forte teneur en métaux) et non régénérables.

L'art antérieur évoque également des catalyseurs trimétalliques NiMoW supportés tels que décrits par exemple par Solmanov et al. dans la publication Russian Journal of Applied Chemistry, 2018, Vol. 91, No. 8, pp. 1363-1369.

Le document US2019/126254 décrit un catalyseur NiMoWP supporté contenant entre 15 et 25 % pds, exprimé en oxydes, de Mo et/ou W, entre 3 et 6 % pds, exprimé en oxydes, de Ni, entre 0,1 et 1 % pds, exprimé en oxydes, de P, et entre 0,1 et 0,7 % mol d'additif par rapport aux métaux (VIB + VIII).

Le document US8697598 divulgue un catalyseur supporté NiMoW contenant du phosphore et/ou du fluor avec une teneur en nickel entre 1 et 10% pds (exprimée en NiO), une teneur totale de molybdène et de tungstène comprise entre 10 et 50% pds (exprimée en oxydes), du fluor et/ou du phosphore, exprimée en élément, dans une teneur entre 0,2 et 14% pds et un ratio molaire $WO_3/Mo_3$ compris entre 2,6-30.

Quel que soit le catalyseur choisi, les modifications induites ne permettent pas toujours d'accroître suffisamment les performances du catalyseur pour faire face aux spécifications concernant les teneurs en soufre, azote et/ou aromatiques des carburants. De plus, il est souvent très compliqué de procéder à leur déploiement industriel tant les méthodes sont complexes à mettre en oeuvre.

En conséquence, il ressort comme indispensable, pour les fabricants de catalyseurs, de trouver de nouveaux catalyseurs d'hydrotraitement et/ou d'hydrocraquage à performances améliorées.

**Résumé**

L'invention concerne un catalyseur comprenant un support à base d'alumine ou de silice ou de silice-alumine, une phase active constituée de nickel, de molybdène et de tungstène, et du phosphore, caractérisé en ce que :

- la teneur en nickel, mesurée sous forme NiO, est comprise entre 3 et 4 % poids par rapport au poids total du catalyseur,
- la teneur en molybdène, mesurée sous forme $MoO_3$, est comprise entre 2 et 4 % poids par rapport au poids total du catalyseur,

- la teneur en tungstène, mesurée sous forme WO$_3$, est comprise entre 34 et 40 % poids par rapport au poids total du catalyseur,
- la teneur en phosphore, mesurée sous forme P$_2$O$_5$, est comprise entre 3 et 4 % poids par rapport au poids total du catalyseur,
- le ratio molaire WO$_3$/MoO$_3$ est compris entre 5,3 et 12,4 mol/mol,
- le ratio molaire NiO/(WO$_3$+MoO$_3$) est compris entre 0,20 et 0,33 mol/mol,
- le ratio molaire P$_2$O$_5$/(WO$_3$+MoO$_3$) est compris entre 0,21 et 0,34 mol/mol.

La Demanderesse a découvert de manière surprenante qu'un catalyseur à base d'une phase active constituée de nickel, de molybdène et de tungstène en présence de phosphore, déposés sur un support, et présentant des ratios spécifiques entre ces différents métaux et/ou le phosphore, présente par effet synergique une meilleure activité en hydrotraitement, et notamment en hydrogénation des aromatiques (HDA) mais également en hydrodésulfuration (HDS) et/ou en hydrodéazotation (HDN) par rapport aux catalyseurs divulgués dans l'art antérieur. Typiquement, grâce à l'augmentation de l'activité, la température nécessaire pour atteindre une teneur en soufre, azote ou aromatiques souhaitée (par exemple au maximum 10 ppm de soufre dans le cas d'une charge gazole, en mode ULSD ou Ultra Low Sulfur Diesel selon la terminologie anglo-saxonne ou encore une teneur < 8 % pds de polyaromatiques et un indice de cétane > 46 (été) et 43-46 (hiver)) peut être baissée. De même, la stabilité est augmentée, car la durée de cycle est prolongée grâce à la réduction de température nécessaire.

Sans vouloir être lié par une quelconque théorie, une optimisation de la teneur de chaque métal et du phosphore en utilisant des ratios spécifiques permettrait d'obtenir une phase active induisant une amélioration des performances catalytiques. En effet, le tungstène est connu pour être plus actif en hydrogénation des aromatiques que le molybdène, cependant sa sulfuration est plus difficile. La proximité du molybdène dans la phase active contenant du tungstène et l'augmentation du ratio WO$_3$/MoO$_3$ permettent d'améliorer la sulfurabilité du tungstène et les performances catalytiques observées, jusqu'à un certain ratio WO$_3$/MoO$_3$ où la teneur en molybdène est trop faible pour influencer sur la sulfurabilité du tungstène. Ainsi, l'optimisation du ratio WO$_3$/MoO$_3$ en combinaison avec les ratios NiO/(WO$_3$+MoO$_3$) et P$_2$O$_5$/(WO$_3$+MoO$_3$) optimisés permet d'obtenir un catalyseur très actif en hydrotraitement, et notamment en hydrogénation des aromatiques (HDA).

Selon une variante, le catalyseur est caractérisé en ce que :

- la teneur en nickel, mesurée sous forme NiO, est comprise entre 3,1 et 3,9 % poids par rapport au poids total du catalyseur,
- la teneur en molybdène, mesurée sous forme MoOs, est comprise entre 2,2 et 3,8 % poids par rapport au poids total du catalyseur,
- la teneur en tungstène, mesurée sous forme WO$_3$, est comprise entre 35 et 39,9 % poids par rapport au poids total du catalyseur,
- la teneur en phosphore, mesurée sous forme P$_2$O$_5$, est comprise entre 3,1 et 3,9 % poids par rapport au poids total du catalyseur,
- le ratio molaire WO$_3$/MoO$_3$ est compris entre 5,7 et 11,1 mol/mol,
- le ratio molaire NiO/(WO$_3$+MoO$_3$) est compris entre 0,21 et 0,31 mol/mol,
- le ratio molaire P$_2$O$_5$/(WO$_3$+MoO$_3$) est compris entre 0,22 et 0,33 mol/mol.

Selon une variante, le catalyseur est caractérisé en ce que :

- la teneur en nickel, mesurée sous forme NiO, est comprise entre 3,2 et 3,8 % poids par rapport au poids total du catalyseur,
- la teneur en molybdène, mesurée sous forme MoO$_3$, est comprise entre 2,5 et 3,5 % poids par rapport au poids total du catalyseur,
- la teneur en tungstène, mesurée sous forme WO$_3$, est comprise entre 36 et 39 % poids par rapport au poids total du catalyseur,
- la teneur en phosphore, mesurée sous forme P$_2$O$_5$, est comprise entre 3,2 et 3,8 % poids par rapport au poids total du catalyseur,
- le ratio molaire WO$_3$/MoO$_3$ est compris entre 6,4 et 9,7 mol/mol,
- le ratio molaire NiO/(WO$_3$+MoO$_3$) est compris entre 0,22 et 0,30 mol/mol,
- le ratio molaire P$_2$O$_5$/(WO$_3$+MoO$_3$) est compris entre 0,23 et 0,32 mol/mol.

Selon une variante, le catalyseur présente une densité en métaux du groupe VIB, exprimée en nombre d'atomes desdits métaux par unité de surface du catalyseur comprise entre 5 et 12 atomes des métaux du groupe VIB par nm$^2$ de catalyseur.

Selon une variante, le catalyseur contient en outre un composé organique contenant de l'oxygène et/ou de l'azote et/ou du soufre.

Selon cette variante, le composé organique est choisi parmi un composé comportant une ou plusieurs fonctions chimiques choisies parmi une fonction carboxylique, alcool, thiol, thioéther, sulfone, sulfoxyde, éther, aldéhyde, cétone, ester, carbonate, amine, nitrile, imide, oxime, urée, amide ou encore les composés incluant un cycle furanique ou encore les sucres.

Selon une variante, le composé organique est choisi parmi parmi la γ-valérolactone, la 2-acétylbutyrolactone, le triéthylèneglycol, le diéthylèneglycol, l'éthylèneglycol, l'acide éthylènediaminetétra-acétique (EDTA), l'acide maléique, l'acide malonique, l'acide citrique, l'acide acétique, l'acide gluconique, le glucose, le fructose, le saccharose, le sorbitol, le xylitol, l'acide γ-cétovalérique, un succinate de dialkyle C1-C4 et plus particulièrement le succinate de diméthyle, le diméthylformamide, la 1-méthyl-2-pyrrolidinone, le carbonate de propylène, le 3-oxobutanoate de 2-méthoxyéthyle, la bicine, la tricine, le 2-furaldéhyde (aussi connu sous le nom furfural), le 5-hydroxyméthylfurfural (aussi connu sous le nom 5-(hydroxyméthyl)-2-furaldéhyde ou 5-HMF), le 2-acétylfurane, le 5-méthyl-2-furaldéhyde, l'acide ascorbique, le lactate de butyle, le lactate d'éthyle, le butyryllactate de butyle, le 3-hydroxybutanoate d'éthyle, le 3-éthoxypropanoate d'éthyle, l'acétate de 2-éthoxyéthyle, l'acétate de 2-butoxyéthyle, l'acrylate de 2-hydroxyéthyle, la 1-vinyl-2-pyrrolidinone, la 1,3-diméthyl-2-imidazolidinone, le 1,5-pentanediol, la1-(2-hydroxyéthyl)-2-pyrrolidinone, la 1-(2-hydroxyéthyl)-2,5-pyrrolidinedione, la 5-méthyl-2(3H)-furanone, la 1-méthyl-2-pipéridinone, l'acide 4-aminobutanoïque, le glycolate de butyle, le 2-mercaptopropanoate d'éthyle, le 4-oxopentanoate d'éthyle, le maléate de diéthyle, le maléate de diméthyle, le fumarate de diméthyle, le fumarate de diéthyle, l'adipate de diméthyle et le 3-oxoglutarate de diméthyle.

Selon une variante, la teneur en composé organique est comprise entre 1 et 30 % poids par rapport au poids total du catalyseur.

Selon une variante, le catalyseur est au moins partiellement sulfuré.

L'invention concerne également un procédé de préparation du catalyseur selon l'invention comprenant les étapes suivantes :

a) on met en contact au moins un précurseur de nickel, un précurseur de molybdène et un précurseur de tungstène et le phosphore avec un support à base d'alumine ou de silice ou de silice-alumine, de manière à obtenir un précurseur de catalyseur,
b) on sèche ledit précurseur de catalyseur issu de l'étape a) à une température inférieure à 200°C.

Selon une variante, le procédé de préparation comprend en outre une étape c) dans laquelle on calcine le catalyseur obtenu à l'étape b) à une température comprise entre 200°C et 550°C.

Selon une variante, le procédé de préparation comprend en outre une étape d) dans laquelle on sulfure le catalyseur obtenu à l'étape b) ou à l'étape c).

L'invention concerne également l'utilisation du catalyseur selon l'invention dans un procédé d'hydrotraitement et/ou d'hydrocraquage de coupes hydrocarbonées.

**Description détaillée de l'invention**

**Définitions**

Dans la suite, les groupes d'éléments chimiques sont donnés selon la classification CAS (CRC Handbook of Chemistry and Physics, éditeur CRC press, rédacteur en chef D.R. Lide, 81ème édition, 2000-2001). Par exemple, le groupe VIII selon la classification CAS correspond aux métaux des colonnes 8, 9 et 10 selon la nouvelle classification IUPAC.

On entend par surface spécifique, la surface spécifique BET ($S_{BET}$ en $m^2/g$) déterminée par adsorption d'azote conformément à la norme ASTM D 3663-78 établie à partir de la méthode BRUNAUER-EMMETT-TELLER décrite dans le périodique "The Journal of American Society", 1938, 60, 309.

On entend par volume poreux total du catalyseur ou du support utilisé pour la préparation du catalyseur le volume mesuré par intrusion au porosimètre à mercure selon la norme ASTM D4284-83 à une pression maximale de 4000 bar (400 MPa), utilisant une tension de surface de 484 dyne/cm et un angle de contact de 140°. L'angle de mouillage a été pris égal à 140° en suivant les recommandations de l'ouvrage « Techniques de l'ingénieur, traité analyse et caractérisation », pages 1050-1055, écrit par Jean Charpin et Bernard Rasneur. Afin d'obtenir une meilleure précision, la valeur du volume poreux total correspond à la valeur du volume poreux total mesuré par intrusion au porosimètre à mercure mesurée sur l'échantillon moins la valeur du volume poreux total mesuré par intrusion au porosimètre à mercure mesurée sur le même échantillon pour une pression correspondant à 30 psi (environ 0,2 MPa).

Les teneurs en métaux du groupe VIII, du groupe VIB et du phosphore sont mesurées par fluorescence X.

Les teneurs en métal du groupe VIB, en métal du groupe VIII et en phosphore dans le catalyseur sont exprimées en oxydes après correction de la perte au feu de l'échantillon de catalyseur à 550°C pendant deux heures en four à moufle. La perte au feu est due à la perte d'humidité. Elle est déterminée selon l'ASTM D7348.

On entend par hydrotraitement des réactions englobant notamment l'hydrodésulfuration (HDS), l'hydrodéazotation (HDN) et l'hydrogénation des aromatiques (HDA).

**Catalyseur**

L'invention concerne un catalyseur comprenant un support à base d'alumine ou de silice ou de silice-alumine, une phase active constituée de nickel, de molybdène et de tungstène, et du phosphore, caractérisé en ce que :

- la teneur en nickel, mesurée sous forme NiO, est comprise entre 3 et 4 % poids par rapport au poids total du catalyseur,
- la teneur en molybdène, mesurée sous forme MoOs, est comprise entre 2 et 4 % poids par rapport au poids total du catalyseur,
- la teneur en tungstène, mesurée sous forme $WO_3$, est comprise entre 34 et 40 % poids par rapport au poids total du catalyseur,
- la teneur en phosphore, mesurée sous forme $P_2O_5$, est comprise entre 3 et 4 % poids par rapport au poids total du catalyseur,
- le ratio molaire $WO_3/MoO_3$ est compris entre 5,3 et 12,4 mol/mol,
- le ratio molaire $NiO/(WO_3+MoO_3)$ est compris entre 0,20 et 0,33 mol/mol,
- le ratio molaire $P_2O_5/(WO_3+MoO_3)$ est compris entre 0,21 et 0,34 mol/mol.

La fonction hydrogénante dudit catalyseur, aussi appelée phase active, est constituée de nickel, de molybdène et de tungstène.

La teneur en nickel, mesurée sous forme NiO, est comprise entre 3 et 4 % poids par rapport au poids total du catalyseur, de préférence entre 3,1 et 3,9 % poids, et de manière plus préférée entre 3,2 et 3,8 % poids.

La teneur en molybdène, mesurée sous forme $MoO_3$, est comprise entre 2 et 4 % poids par rapport au poids total du catalyseur, de préférence entre 2,2 et 3,8 % poids, et de manière plus préférée entre 2,5 et 3,5 % poids.

La teneur en tungstène, mesurée sous forme $WO_3$, est comprise entre 34 et 40 % poids par rapport au poids total du catalyseur, de préférence entre 35 et 39,9 % poids, et de manière plus préférée entre 36 et 39 % poids.

Le ratio molaire $WO_3/MoO_3$ est compris entre 5,3 et 12,4 mol/mol, de préférence compris entre 5,7 et 11,1 mol/mol et de manière encore plus préférée compris entre 6,4 et 9,7 mol/mol.

Le ratio molaire $NiO/(WO_3+MoO_3)$ est compris entre 0,20 et 0,33 mol/mol, de préférence compris entre 0,21 et 0,31 mol/mol et de manière encore plus préférée compris entre 0,22 et 0,30 mol/mol.

Le catalyseur selon l'invention comprend également du phosphore en tant que dopant. Le dopant est un élément ajouté qui en lui-même ne présente aucun caractère catalytique mais qui accroît l'activité catalytique de la phase active.

La teneur en phosphore dans ledit catalyseur, mesurée sous forme $P_2O_5$, est de préférence comprise entre 3 et 4 % poids par rapport au poids total du catalyseur, de préférence entre 3,1 et 3,9 % poids, et de manière très préférée entre 3,2 et 3,8 % poids.

Le ratio molaire $P_2O_5/(WO_3+MoO_3)$ est compris entre 0,21 et 0,34 mol/mol, de préférence compris entre 0,22 et 0,33 mol/mol et de manière encore plus préférée compris entre 0,23 et 0,32 mol/mol.

En outre, le catalyseur présente une densité en métaux du groupe VIB (Mo+W), exprimée en nombre d'atomes desdits métaux par unité de surface du catalyseur, qui est comprise entre 5 et 12 atomes des métaux du groupe VIB par $nm^2$ de catalyseur, de manière préférée comprise entre 6 et 11, de manière encore plus préférée comprise entre 7 et 10. La densité en métaux du groupe VIB, exprimée en nombre d'atomes des métaux du groupe VIB par unité de surface du catalyseur (nombre d'atomes de métaux du groupe VIB par $nm^2$ de catalyseur) est calculée par exemple à partir de la relation suivante :

$$d(métal\ du\ groupe\ VIB) = \frac{\left(\frac{X_{Mo}}{M_{Mo}} + \frac{X_W}{M_W}\right) \times N_A}{100 \times 10^{18} \times S}$$

avec :

$X_{Mo}$ = % poids de molybdène;
$X_W$ = % poids de tungstène;
$N_A$ = Nombre d'Avogadro égal à $6,022.10^{23}$;
S = Surface spécifique du catalyseur ($m^2/g$), mesurée selon la norme ASTM D3663;

$M_{Mo}$ = Masse molaire du molybdène ;
$M_{Mo}$ = Masse molaire du tungstène.

A titre d'exemple, si le catalyseur contient 3% poids d'oxyde de molybdène MoO$_3$ (soit 2,0% poids de Mo) et 29,3% poids d'oxyde de tungstène et a une surface spécifique de 122 m$^2$/g, la densité d(Mo+W) est égale à :

$$d(Mo + W) = \frac{\left(\frac{2,0}{95,94} + \frac{29,3}{183,84}\right) \times N_A}{100 \times 10^{18} \times 122}$$

$$= 8,9 \; atomes \; de \; métaux \; du \; groupe \; VIB/nm^2 \; de \; catalyseur$$

Le catalyseur selon l'invention peut avantageusement contenir en outre au moins un dopant choisi parmi le bore, le fluor et un mélange de bore et de fluor.

Lorsque le catalyseur contient du bore ou du fluor ou un mélange de bore et de fluor, la teneur en bore ou en fluor ou en mélange des deux est de préférence comprise entre 0,1 et 10 % poids exprimé en oxyde de bore et/ou en fluor par rapport au poids total du catalyseur, de préférence entre 0,2 et 7 % poids, et de manière très préférée comprise entre 0,2 et 5 % poids.

Le volume poreux du catalyseur est généralement compris entre 0,1 cm$^3$/g et 1,5 cm$^3$/g, de préférence compris entre 0,15 cm$^3$/g et 1,1 cm$^3$/g. Le volume poreux total est mesuré par porosimétrie au mercure selon la norme ASTM D4284 avec un angle de mouillage de 140°, telle que décrite dans l'ouvrage Rouquerol F. ; Rouquerol J. ; Singh K. « Adsorption by Powders & Porous Solids : Principle, methodology and applications », Academic Press, 1999, par exemple au moyen d'un appareil modèle Autopore III™ de la marque Micromeritics™.

Le catalyseur se caractérise par une surface spécifique comprise entre 5 et 350 m$^2$/g, de préférence comprise entre 10 et 330 m$^2$/g, de préférence comprise entre 40 et 320 m$^2$/g, de manière très préférée comprise entre 50 et 300 m$^2$/g. La surface spécifique est déterminée dans la présente invention par la méthode B.E.T selon la norme ASTM D3663, méthode décrite dans le même ouvrage cité ci-dessus.

Le support du catalyseur comprend, et de préférence est constitué de, une alumine ou une silice ou une silice-alumine.

Lorsque le support dudit catalyseur est à base d'alumine, il contient plus de 50 % poids d'alumine par rapport au poids total du support et, de façon générale, il contient uniquement de l'alumine ou de la silice-alumine telle que définie ci-dessous.

De préférence, le support comprend de l'alumine, et de préférence de l'alumine extrudée. De préférence, l'alumine est l'alumine gamma.

Le support d'alumine présente avantageusement un volume poreux total compris entre 0,1 et 1,5 cm$^3$.g$^{-1}$, de préférence entre 0,4 et 1,1 cm$^3$.g$^{-1}$. Le volume poreux total est mesuré par porosimétrie au mercure selon la norme ASTM D4284 avec un angle de mouillage de 140°, telle que décrite dans l'ouvrage Rouquerol F. ; Rouquerol J. ; Singh K. « Adsorption by Powders & Porous Solids : Principle, methodology and applications », Academic Press, 1999, par exemple au moyen d'un appareil modèle Autopore III™ de la marque Micromeritics™.

La surface spécifique du support d'alumine est avantageusement comprise entre 5 et 400 m$^2$.g$^{-1}$, de préférence entre 10 et 350 m$^2$.g$^{-1}$, de manière plus préférée entre 40 et 350 m$^2$.g$^{-1}$. La surface spécifique est déterminée dans la présente invention par la méthode B.E.T selon la norme ASTM D3663, méthode décrite dans le même ouvrage cité ci-dessus.

Dans un autre cas préféré, le support dudit catalyseur est une silice-alumine contenant au moins 50 % poids d'alumine par rapport au poids total du support. La teneur en silice dans le support est d'au plus 50% poids par rapport au poids total du support, le plus souvent inférieure ou égale à 45% poids, de préférence inférieure ou égale à 40%.

Les sources de silicium sont bien connues de l'Homme du métier. On peut citer à titre d'exemple l'acide silicique, la silice sous forme de poudre ou sous forme colloïdale (sol de silice), le tétraéthylorthosilicate Si(OEt)$_4$.

Lorsque le support dudit catalyseur est à base de silice, il contient plus de 50 % poids de silice par rapport au poids total du support et, de façon générale, il contient uniquement de la silice.

Selon une variante particulièrement préférée, le support est constitué d'alumine, de silice ou de silice-alumine.

Le support peut aussi avantageusement contenir en outre une zéolithe. Dans ce cas, toutes les sources de zéolithe et toutes les méthodes de préparations associées connues de l'Homme du métier peuvent être incorporées. De préférence, la zéolithe est choisie parmi le groupe FAU, BEA, ISV, IWR, IWW, MEI, UWY et de manière préférée, la zéolithe est choisie parmi le groupe FAU et BEA, telle que la zéolithe Y et/ou bêta, et de manière particulièrement préférée telle que la zéolithe USY et/ou bêta. Lorsque la zéolithe est présente, sa teneur est comprise de 0,1 à 50% poids par rapport au poids total du support.

Le support se présente avantageusement sous forme de billes, d'extrudés, de pastilles ou d'agglomérats irréguliers et non sphériques dont la forme spécifique peut résulter d'une étape de concassage.

Le catalyseur selon l'invention peut en outre comprendre un composé organique ou un groupe de composés organiques connus pour leur rôle d'additifs. La fonction des additifs est d'augmenter l'activité catalytique par rapport aux catalyseurs non additivés. Plus particulièrement, le catalyseur selon l'invention peut en outre comprendre un ou plusieurs composés organiques contenant de l'oxygène et/ou un ou plusieurs composés organiques contenant de l'azote et/ou un ou plusieurs composés organiques contenant du soufre. De préférence, le catalyseur selon l'invention peut en outre comprendre un ou plusieurs composés organiques contenant de l'oxygène et/ou un ou plusieurs composés organiques contenant de l'azote. De préférence, le composé organique contient au moins 2 atomes de carbone et au moins un atome d'oxygène et/ou d'azote, sans contenir d'autres hétéroatomes.

Généralement, le composé organique est choisi parmi un composé comportant une ou plusieurs fonctions chimiques choisies parmi une fonction carboxylique, alcool, thiol, thioéther, sulfone, sulfoxyde, éther, aldéhyde, cétone, ester, carbonate, amine, nitrile, imide, oxime, urée et amide ou encore les composés incluant un cycle furanique ou encore les sucres.

Le composé organique contenant de l'oxygène peut être l'un ou plusieurs choisis parmi les composés comportant une ou plusieurs fonctions chimiques choisies parmi une fonction carboxylique, alcool, éther, aldéhyde, cétone, ester ou carbonate ou encore les composés incluant un cycle furanique ou encore les sucres. On entend ici par un composé organique contenant de l'oxygène un composé ne comportant pas d'autre hétéroatome. A titre d'exemple, le composé organique contenant de l'oxygène peut être l'un ou plusieurs choisis dans le groupe constitué par l'éthylèneglycol, le diéthylèneglycol, le triéthylèneglycol, un polyéthylèneglycol (avec un poids moléculaire compris entre 200 et 1500 g/mol), le propylèneglycol, le 2-butoxyéthanol, 2-(butoxyéthoxy)éthanol, 2-(2-méthoxyéthoxy)éthanol, le triéthylèneglycoldiméthyléther, le glycérol, l'acétophénone, la 2,4-pentanedione, la pentanone, l'acide acétique, l'acide oxalique, l'acide maléique, l'acide malique, l'acide malonique, l'acide oxalique, l'acide gluconique, l'acide tartrique, l'acide citrique, l'acide $\gamma$-cétovalérique, un succinate de dialkyle C1-C4 et plus particulièrement le succinate de diméthyle, l'acétoacétate de méthyle, l'acétoacétate d'éthyle, le 3-oxobutanoate de 2-méthoxyéthyle, le 3-oxobutanoate de 2-méthacryloyloxyéthyle, le dibenzofurane, un éther couronne, l'acide orthophtalique, le glucose, le fructose, le saccharose, le sorbitol, le xylitol, la $\gamma$-valérolactone, la 2-acétylbutyrolactone, le carbonate de propylène, le 2-furaldéhyde (aussi connu sous le nom furfural), le 5-hydroxyméthylfurfural (aussi connu sous le nom 5-(hydroxyméthyl)-2-furaldéhyde ou 5-HMF), le 2-acétylfurane, le 5-méthyl-2-furaldéhyde, le 2-furoate de méthyle, l'alcool furfurylique (aussi connu sous le nom furfuranol), l'acétate de furfuryle, l'acide ascorbique, le lactate de butyle, le lactate d'éthyle, le butyryllactate de butyle, le 3-hydroxybutanoate d'éthyle, le 3-éthoxypropanoate d'éthyle, le 3-méthoxypropanoate de méthyle, l'acétate de 2-éthoxyéthyle, l'acétate de2-butoxyéthyle, l'acrylate de 2-hydroxyéthyle, le méthacrylate de 2-hydroxyéthyle, le 1,5-pentanediol, le 3-méthyl-1,5-pentanediol, le 1,5-hexanediol, le 3-éthyl-1,5-pentanediol, le 2,4-diéthyl-1,5-pentanediol, la 5-méthyl-2(3H)-furanone, le glycolate de butyle, le 4-oxo-pentanoate d'éthyle, le maléate de diéthyle, le maléate de diméthyle, le fumarate de diméthyle, le fumarate de diéthyle, l'adipate de diméthyle,le 3-oxoglutarate de diméthyle, le tartrate de diméthyle, le tartrate de diéthyle, le tartrate de diisopropyle, le tartrate de di-tert-butyle, le malate de diméthyle, le malate de diéthyle, le malate de diisopropyle et le malate de dibutyle.

Le composé organique contenant de l'azote peut être l'un ou plusieurs choisis parmi les composés comportant une ou plusieurs fonctions chimiques choisies parmi une fonction amine ou nitrile. On entend ici par un composé organique contenant de l'azote un composé ne comportant pas d'autre hétéroatome. A titre d'exemple, le composé organique contenant de l'azote peut être l'un ou plusieurs choisis dans le groupe constitué par l'éthylènediamine, la diéthylènetriamine, l'hexaméthylènediamine, la triéthylènetétramine, la tétraéthylènepentamine, la pentaéthylènehexamine, l'acétonitrile, l'octylamine, la guanidine ou un carbazole.

Le composé organique contenant de l'oxygène et de l'azote peut être l'un ou plusieurs choisis parmi les composés comportant une ou plusieurs fonctions chimiques choisies parmi une fonction acide carboxylique, alcool, éther, aldéhyde, cétone, ester, carbonate, amine, nitrile, imide, amide, urée ou oxime. On entend ici par un composé organique contenant de l'oxygène et de l'azote un composé ne comportant pas d'autre hétéroatome. A titre d'exemple, le composé organique contenant de l'oxygène et de l'azote peut être l'un ou plusieurs choisis dans le groupe constitué par l'acide 1,2-cyclohexanediaminetétraacétique, la monoéthanolamine (MEA), la 1-méthyl-2-pyrrolidinone, le diméthylformamide, l'acide éthylènediaminetétraacétique (EDTA), l'alanine, la glycine, l'acide nitrilotriacétique (NTA), l'acide N-(2-hydroxyéthyl)éthylènediamine-N,N',N'-triacétique (HEDTA), l'acide diéthylène-triaminepentaacétique (DTPA), la tétraméthylurée, l'acide glutamique, le diméthylglyoxime, la bicine, la tricine, le cyanoacétate de 2-méthoxyéthyle, la 1-éthyl-2-pyrrolidinone, la 1-vinyl-2-pyrrolidinone, la 1,3-diméthyl-2-imidazolidinone, la 1-(2-hydroxyéthyl)-2-pyrrolidinone, la 1-(2-hydroxyéthyl)-2,5-pyrrolidinedione, la 1-méthyl-2-pipéridinone, la 1-acétyl-2-azépanone, la 1-vinyl-2-azépanone et l'acide 4-aminobutanoïque.

Le composé organique contenant du soufre peut être l'un ou plusieurs choisis parmi les composés comportant une ou plusieurs fonctions chimiques choisies parmi une fonction thiol, thioéther, sulfone ou sulfoxyde. A titre d'exemple, le composé organique contenant du soufre peut être l'un ou plusieurs choisis dans le groupe constitué par l'acide thioglycolique, le 2,2'-thiodiéthanol, l'acide 2-hydroxy-4-méthylthiobutanoïque, un dérivé sulfoné d'un benzothiophène ou un dérivé sulfoxydé d'un benzothiophène, le 2-mercaptopropanoate d'éthyle, le 3-(méthylthio)propanoate de méthyle et le 3-(méthylthio)propanoate d'éthyle.

De préférence, le composé organique contient de l'oxygène, de manière préférée il est choisi parmi la $\gamma$-valérolactone, la 2-acétylbutyrolactone, le triéthylèneglycol, le diéthylèneglycol, l'éthylèneglycol, l'acide éthylènediaminetétra-acétique (EDTA), l'acide maléique, l'acide malonique, l'acide citrique, l'acide acétique, l'acide oxalique, l'acide gluconique, le glucose, le fructose, le saccharose, le sorbitol, le xylitol, l'acide $\gamma$-cétovalérique, un succinate de dialkyle C1-C4 et plus particulièrement le succinate de diméthyle, le diméthylformamide, la 1-méthyl-2-pyrrolidinone, le carbonate de propylène, le 3-oxobutanoate de 2-méthoxyéthyle, la bicine, la tricine, le 2-furaldéhyde (aussi connu sous le nom furfural), le 5-hydroxyméthylfurfural (aussi connu sous le nom 5-(hydroxyméthyl)-2-furaldéhyde ou 5-HMF), le 2-acétylfurane, le 5-méthyl-2-furaldéhyde, l'acide ascorbique, le lactate de butyle, le lactate d'éthyle, le butyryllactate de butyle, le 3-hydroxybutanoate d'éthyle, le 3-éthoxypropanoate d'éthyle, l'acétate de 2-éthoxyéthyle, l'acétate de 2-butoxyéthyle, l'acrylate de 2-hydroxyéthyle, la 1-vinyl-2-pyrrolidinone, la 1,3-diméthyl-2-imidazolidinone, le 1,5-pentanediol, la1-(2-hydroxyéthyl)-2-pyrrolidinone, la 1-(2-hydroxyéthyl)-2,5-pyrrolidinedione, la 5-méthyl-2(3H)-furanone, la 1-méthyl-2-pipéridinone, l'acide 4-aminobutanoïque, le glycolate de butyle, le 2-mercaptopropanoate d'éthyle, le 4-oxopentanoate d'éthyle, le maléate de diéthyle, le maléate de diméthyle, le fumarate de diméthyle, le fumarate de diéthyle, l'adipate de diméthyle et le 3-oxoglutarate de diméthyle.

Lorsqu'il(s) est/sont présent(s), la teneur totale en composé(s) organique(s) contenant de l'oxygène et/ou de l'azote et/ou du soufre présent(s) dans le catalyseur est généralement comprise entre 1 et 30 % poids, de préférence entre 1,5 et 25 % poids, et de manière plus préférée entre 2 et 20 % poids par rapport au poids total du catalyseur.

Lors de la préparation du catalyseur nécessitant une étape de séchage, la ou les étapes de séchage consécutive(s) à l'introduction du composé organique est (sont) réalisée(s) à une température inférieure à 200°C de manière à conserver de préférence au moins 30 %, de préférence au moins 50 %, et de manière très préférée au moins 70 % de la quantité du composé organique introduite calculée sur la base du carbone restant sur le catalyseur. Le carbone restant est mesuré par analyse élémentaire selon ASTM D5373.

Selon un mode de réalisation le catalyseur selon l'invention comprend, et est de préférence constituée de, un support à base d'alumine ou de silice ou de silice-alumine, une phase active constituée de nickel, de molybdène et de tungstène, et du phosphore, caractérisé en ce que :

- la teneur en nickel, mesurée sous forme NiO, est comprise entre 3 et 4 % poids par rapport au poids total du catalyseur, de préférence entre 3,1 et 3,9 % poids, et de manière plus préférée entre 3,2 et 3,8 % poids.
- la teneur en molybdène, mesurée sous forme $MoO_3$, est comprise entre 2 et 4 % poids par rapport au poids total du catalyseur, de préférence entre 2,2 et 3,8 % poids, et de manière plus préférée entre 2,5 et 3,5 % poids,
- la teneur en tungstène, mesurée sous forme $WO_3$, est comprise entre 34 et 40 % poids par rapport au poids total du catalyseur, de préférence entre 35 et 39,9 % poids, et de manière plus préférée entre 36 et 39 % poids,
- la teneur en phosphore, mesurée sous forme $P_2O_5$, est comprise entre 3 et 4 % poids par rapport au poids total du catalyseur, de préférence entre 3,1 et 3,9 % poids, et de manière plus préférée entre 3,2 et 3,8 % poids,
- le ratio molaire $WO_3/MoO_3$ est compris entre 5,3 et 12,4 mol/mol, de préférence compris entre 5,7 et 11,1 mol/mol et de manière plus préférée compris entre 6,4 et 9,7 mol/mol,
- le ratio molaire $NiO/(WO_3+MoO_3)$ est compris entre 0,20 et 0,33 mol/mol, de préférence compris entre 0,21 et 0,31 mol/mol et de manière plus préférée compris entre 0,22 et 0,30 mol/mol,
- le ratio molaire $P_2O_5/(WO_3+MoO_3)$ est compris entre 0,21 et 0,34 mol/mol, de préférence compris entre 0,22 et 0,33 mol/mol et de manière plus préférée compris entre 0,23 et 0,32 mol/mol.

Selon un autre mode de réalisation le catalyseur selon l'invention comprend, et est de préférence constituée de, un support à base d'alumine ou de silice ou de silice-alumine, une phase active constituée de nickel, de molybdène et de tungstène, et du phosphore, et d'un composé organique contenant de l'oxygène et/ou de l'azote et/ou du soufre, caractérisé en ce que :

- la teneur en nickel, mesurée sous forme NiO, est comprise entre 3 et 4 % poids par rapport au poids total du catalyseur, de préférence entre 3,1 et 3,9 % poids, et de manière plus préférée entre 3,2 et 3,8 % poids,
- la teneur en molybdène, mesurée sous forme MoOs, est comprise entre 2 et 4 % poids par rapport au poids total du catalyseur, de préférence entre 2,2 et 3,8 % poids, et de manière plus préférée entre 2,5 et 3,5 % poids,
- la teneur en tungstène, mesurée sous forme $WO_3$, est comprise entre 34 et 40 % poids par rapport au poids total du catalyseur, de préférence entre 35 et 39,9 % poids, et de manière plus préférée entre 36 et 39 % poids,
- la teneur en phosphore, mesurée sous forme $P_2O_5$, est comprise entre 3 et 4 % poids par rapport au poids total du catalyseur, de préférence entre 3,1 et 3,9 % poids, et de manière plus préférée entre 3,2 et 3,8 % poids,
- le ratio molaire $WO_3/MoO_3$ est compris entre 5,3 et 12,4 mol/mol, de préférence compris entre 5,7 et 11,1 mol/mol et de manière plus préférée compris entre 6,4 et 9,7 mol/mol,

- le ratio molaire $NiO/(WO_3+MoO_3)$ est compris entre 0,20 et 0,33 mol/mol, de préférence compris entre 0,21 et 0,31 mol/mol et de manière plus préférée compris entre 0,22 et 0,30 mol/mol,

- le ratio molaire $P_2O_5/(WO_3+MoO_3)$ est compris entre 0,21 et 0,34 mol/mol, de préférence compris entre 0,22 et 0,33 mol/mol et de manière plus préférée compris entre 0,23 et 0,32 mol/mol.

Selon ce mode, le composé organique est de préférence choisi parmi la γ-valérolactone, la 2-acétylbutyrolactone, le triéthylèneglycol, le diéthylèneglycol, l'éthylèneglycol, l'acide éthylènediaminetétra-acétique (EDTA), l'acide maléique, l'acide malonique, l'acide citrique, l'acide acétique, l'acide gluconique, le glucose, le fructose, le saccharose, le sorbitol, le xylitol, l'acide γ-cétovalérique, un succinate de dialkyle C1-C4 et plus particulièrement le succinate de diméthyle, le diméthylformamide, la 1-méthyl-2-pyrrolidinone, le carbonate de propylène, le 3-oxobutanoate de 2-méthoxyéthyle, la bicine, la tricine, le 2-furaldéhyde (aussi connu sous le nom furfural), le 5-hydroxyméthylfurfural (aussi connu sous le nom 5-(hydroxyméthyl)-2-furaldéhyde ou 5-HMF), le 2-acétylfurane, le 5-méthyl-2-furaldéhyde, l'acide ascorbique, le lactate de butyle, le lactate d'éthyle, le butyryllactate de butyle, le 3-hydroxybutanoate d'éthyle, le 3-éthoxypropanoate d'éthyle, l'acétate de 2-éthoxyéthyle, l'acétate de 2-butoxyéthyle, l'acrylate de 2-hydroxyéthyle, la 1-vinyl-2-pyrrolidinone, la 1,3-diméthyl-2-imidazolidinone, le 1,5-pentanediol, la1-(2-hydroxyéthyl)-2-pyrrolidinone, la 1-(2-hydroxyéthyl)-2,5-pyrrolidinedione, la 5-méthyl-2(3H)-furanone, la 1-méthyl-2-pipéridinone, l'acide 4-aminobutanoïque, le glycolate de butyle, le 2-mercaptopropanoate d'éthyle, le 4-oxopentanoate d'éthyle, le maléate de diéthyle, le maléate de diméthyle, le fumarate de diméthyle, le fumarate de diéthyle, l'adipate de diméthyle et le 3-oxoglutarate de diméthyle.

**Procédé de préparation**

Le catalyseur selon l'invention peut être préparé selon tout mode de préparation d'un catalyseur supporté connu de l'Homme de l'art.

Le catalyseur selon l'invention peut être préparé selon un procédé de préparation comprenant les étapes suivantes :

a) on met en contact au moins un précurseur de nickel, un précurseur de molybdène et un précurseur de tungstène et le phosphore avec un support à base d'alumine ou de silice ou de silice-alumine, de manière à obtenir un précurseur de catalyseur,

b) on sèche ledit précurseur de catalyseur issu de l'étape a) à une température inférieure à 200°C,

c) optionnellement, on calcine le précurseur de catalyseur obtenu à l'étape b) à une température comprise entre 200°C et 550°C,

d) optionnellement, on sulfure le catalyseur obtenu à l'étape b) ou à l'étape c).

Lors de la mise en contact de l'étape a), le catalyseur selon l'invention peut être préparé par imprégnation des métaux nickel, molybdène, tungstène et du phosphore sur le support sélectionné. L'imprégnation peut par exemple être réalisée selon le mode connu de l'homme du métier sous la terminologie d'imprégnation à sec, dans lequel on introduit juste la quantité d'éléments désirés sous forme de sels solubles dans le solvant choisi, par exemple de l'eau déminéralisée, de façon à remplir aussi exactement que possible la porosité du support.

Les précurseurs de la phase active à base de nickel, molybdène, tungstène et le phosphore peuvent être introduits simultanément ou successivement. L'imprégnation de chaque précurseur peut être avantageusement réalisée en au moins deux fois. Les différents précurseurs peuvent ainsi être avantageusement imprégnés successivement avec un temps d'imprégnation et de maturation différentié. Un des précurseur peut aussi être imprégné en plusieurs fois.

De préférence, les précurseurs de la phase active à base de nickel, molybdène, tungstène et le phosphore sont introduits simultanément.

Les précurseurs de nickel qui peuvent être utilisés sont avantageusement choisis parmi les oxydes, les hydroxydes, les hydroxycarbonates, les carbonates et les nitrates de nickel, par exemple, l'hydroxycarbonate de nickel, le carbonate ou l'hydroxyde de nickel sont utilisés de manière préférée.

Les précurseurs de molybdène qui peuvent être utilisés sont bien connus de l'Homme du métier. Par exemple, parmi les sources de molybdène, on peut utiliser les oxydes et hydroxydes, les acides molybdiques et leurs sels en particulier les sels d'ammonium tels que le molybdate d'ammonium et l'heptamolybdate d'ammonium, l'acide phosphomolybdique ($H_3PMo_{12}O_{40}$) et leurs sels, et éventuellement l'acide silicomolybdique ($H_4SiMo_{12}O_{40}$) et ses sels. Les sources de molybdène peuvent également être des hétéropolycomposés de type Keggin, Keggin lacunaire, Keggin substitué, Dawson, Anderson, Strandberg, par exemple. On utilise de préférence le trioxyde de molybdène et les hétéropolyanions de type Strandberg, Keggin, Keggin lacunaire ou Keggin substitué.

Les précurseurs de tungstène qui peuvent être utilisés sont également bien connus de l'Homme du métier. Par exemple, parmi les sources de tungstène, on peut utiliser les oxydes et hydroxydes, les acides tungstiques et leurs sels en particulier les sels d'ammonium tels que le tungstate d'ammonium et le métatungstate d'ammonium, l'acide phosphotungstique et leurs sels, et éventuellement l'acide silicotungstique ($H_4SiW_{12}O_{40}$) et ses sels. Les sources de tungstène peuvent également être des hétéropolycomposés de type Keggin, Keggin lacunaire, Keggin substitué, Dawson, par exemple. On utilise de préférence les oxydes et les sels d'ammonium tel que le métatungstate d'ammonium ou les hétéropolyanions de type Keggin, Keggin lacunaire ou Keggin substitué.

Le phosphore, peut être introduit en totalité ou en partie par imprégnation. De préférence, il est introduit par une imprégnation, de préférence à sec, à l'aide d'une solution contenant les précurseurs de nickel, molybdène et tungstène.

Ledit phosphore peut être avantageusement introduit seul ou en mélange avec le nickel, le molybdène et/ou le tungstène, et ce au cours de n'importe laquelle des étapes d'imprégnation des précurseurs de la fonction hydrogénante si ceux-ci sont introduits en plusieurs fois. Ledit phosphore peut aussi être introduit, tout ou partie, lors de l'imprégnation d'un composé organique contenant de l'oxygène et/ou de l'azote et/ou du soufre si celui-ci est introduit séparément des précurseurs de la fonction hydrogénante (cas de la post- et pré-imprégnation décrites ultérieurement). Il peut également être introduit dès la synthèse du support, à n'importe quelle étape de la synthèse de celui-ci. Il peut ainsi être introduit avant, pendant ou après le malaxage de la matrice gel d'alumine choisie, telle que par exemple et de préférence l'oxyhydroxyde d'aluminium (boehmite) précurseur de l'alumine.

Le précurseur de phosphore préféré est l'acide orthophosphorique $H_3PO_4$, mais ses sels et esters comme les phosphates d'ammonium conviennent également. Le phosphore peut également être introduit en même temps que le(s) élément(s) du groupe VIB sous la forme d'hétéropolyanions de Keggin, Keggin lacunaire, Keggin substitué ou de type Strandberg.

Toute solution d'imprégnation décrite dans la présente invention peut comprendre tout solvant polaire connu de l'Homme du métier. Ledit solvant polaire utilisé est avantageusement choisi dans le groupe formé par le méthanol, l'éthanol, l'eau, le phénol, le cyclohexanol, pris seuls ou en mélange. De manière préférée, on utilise un solvant protique polaire. Une liste des solvants polaires usuels ainsi que leur constante diélectrique peut être trouvée dans le livre « Solvents and Solvent Effects in Organic Chemistry », C. Reichardt, Wiley-VCH, 3eme édition, 2003, pages 472-474. De manière très préférée, le solvant utilisé est l'eau ou l'éthanol, et de manière particulièrement préférée, le solvant est l'eau.

Lorsque le catalyseur comprend en outre un dopant choisi parmi le bore, le fluor ou un mélange de bore et de fluor, l'introduction de ce(s) dopant(s) peut se faire de la même manière que l'introduction du phosphore décrite ci-dessus à diverses étapes de la préparation et de diverses manières.

Les précurseurs de bore peuvent être l'acide borique, l'acide orthoborique $H_3BO_3$, le biborate ou le pentaborate d'ammonium, l'oxyde de bore, les esters boriques. Le bore peut être introduit par exemple par une solution d'acide borique dans un mélange eau/alcool ou encore dans un mélange eau/éthanolamine. De préférence le précurseur de bore, si du bore est introduit, est l'acide orthoborique.

Les précurseurs de fluor qui peuvent être utilisés sont bien connus de l'Homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Le fluor peut être introduit par exemple par imprégnation d'une solution aqueuse d'acide fluorhydrique, ou de fluorure d'ammonium ou encore de bifluorure d'ammonium.

Lorsque le catalyseur comprend en outre un composé organique contenant de l'oxygène et/ou de l'azote et/ou du soufre, celui-ci est introduit avant l'étape de séchage b). Le composé organique est en règle général introduit par imprégnation, en présence ou non du nickel, du molybdène du tungstène et du phosphore et en présence ou non d'un solvant.

L'introduction du composé organique comporte plusieurs modes de mise en oeuvre qui se distinguent notamment par le moment de l'introduction du composé organique par rapport à l'introduction des métaux. Elle peut être effectuée soit en même temps que l'imprégnation des métaux (co-imprégnation), soit après l'imprégnation des métaux (post-imprégnation), ou enfin avant l'imprégnation des métaux (pré-imprégnation) notamment lors de la préparation du support, et de manière préférentielle lors de la mise en forme ou par imprégnation sur un support déjà formé. Chaque mode, pris seul ou en combinaison, peut se dérouler en une ou plusieurs étapes.

De plus, l'étape de mise en contact peut combiner au moins deux modes de mise en oeuvre, par exemple la co-imprégnation et la post-imprégnation. Selon un mode de réalisation alternatif, la mise en contact selon l'étape a) combine au moins deux modes de mise en contact, par exemple la co-imprégnation du nickel, du molybdène, du tungstène et du phosphore avec un composé organique, suivi d'un séchage à une température inférieure à 200°C, puis d'une post-imprégnation d'un composé organique qui peut être identique ou différent de celui utilisé pour la co-imprégnation. Chaque mode, pris seul ou en combinaison, peut se dérouler en une ou plusieurs étapes.

Le(s) composé(s) organique(s) est(sont) avantageusement introduits dans une solution d'imprégnation qui, selon le mode de préparation, peut être la même solution ou une solution différente de celle contenant les précurseurs de nickel, de molybdène et de tungstène et le phosphore, dans une quantité correspondant :

- à un rapport molaire du composé organique par la somme des éléments du groupe VIB des précurseurs de catalyseur (Mo et W) compris entre 0,01 à 5 mol/mol, de préférence compris entre 0,05 à 3 mol/mol, de manière préférée compris entre 0,05 et 1,5 mol/mol et de manière très préférée, compris entre 0,1 et 1,2 mol/mol, calculé sur la base des composants introduits dans la ou les solution(s) d'imprégnation, et

- à un rapport molaire du composé organique par élément(s) du groupe VIII du précurseur de catalyseur (Ni) compris entre 0,02 à 17 mol/mol, de préférence compris entre 0,1 à 10 mol/mol, de manière préférée compris entre 0,15 et 8 mol/mol et de manière très préférée, compris entre 0,6 et 5 mol/mol, calculé sur la base des composants introduits dans la ou les solution(s) d'imprégnation.

Lorsque plusieurs composés organiques sont présents, les différents rapports molaires s'appliquent pour chacun des composés organiques présents.

Avantageusement, après chaque étape d'imprégnation, on laisse maturer le support imprégné. La maturation permet à la solution d'imprégnation de diffuser et aux précurseurs de se disperser de manière homogène au sein du support.

Toute étape de maturation décrite dans la présente invention est avantageusement réalisée à pression atmosphérique, dans une atmosphère saturée en eau et à une température comprise entre 17°C et 50°C, et de préférence à température ambiante. Généralement une durée de maturation comprise entre dix minutes et quarante-huit heures et de préférence comprise entre trente minutes et cinq heures, est suffisante. Des durées plus longues ne sont pas exclues, mais n'apportent pas nécessairement d'amélioration.

Conformément à l'étape b) du procédé de préparation selon l'invention, le précurseur de catalyseur obtenu à l'étape a) éventuellement maturé est soumis à une étape de séchage à une température inférieure à 200°C, de préférence comprise entre 50 et 180°C, de manière préférée entre 70 et 150°C et de manière très préférée entre 75 et 130°C.

L'étape de séchage est avantageusement effectuée par toute technique connue de l'Homme du métier. Elle est avantageusement effectuée à pression atmosphérique ou à pression réduite, et de préférence à pression atmosphérique. Elle est avantageusement effectuée en lit traversé en utilisant de l'air ou tout autre gaz chaud. De manière préférée, lorsque le séchage est effectué en lit fixe, le gaz utilisé est soit l'air, soit un gaz inerte comme l'argon ou l'azote. De manière très préférée le séchage est réalisé en lit traversé en présence d'azote et/ou d'air. De préférence, l'étape de séchage a une durée courte comprise entre 5 minutes et 4 heures, de préférence entre 30 minutes et 4 heures et de manière très préférée entre 1 heure et 3 heures. Lorsqu'un composé organique est présent, le séchage est alors conduit de manière à préférentiellement conserver au moins 30 % du composé organique introduit, de préférence cette quantité est supérieure à 50% et de manière encore plus préférée, supérieure à 70%, calculée sur la base du carbone restant sur le catalyseur. A l'issue de l'étape de séchage b), on obtient un catalyseur séché.

Optionnellement, l'étape de séchage b) peut être suivie d'une étape de calcination c).

Selon une cette variante, à l'issue de l'étape b) de séchage, on effectue une étape de calcination c) à une température comprise entre 200°C et 600°C, de préférence comprise entre 250°C et 550°C, sous une atmosphère inerte (azote par exemple) ou sous une atmosphère contenant de l'oxygène (air par exemple). La durée de ce traitement thermique est généralement comprise entre 0,5 heures et 16 heures, de préférence entre 1 heure et 5 heures. Après ce traitement, la phase active se trouve ainsi généralement sous forme oxyde, les hétéropolyanions sont ainsi transformés en oxydes. De même, le catalyseur ne contient plus ou très peu de composé organique lorsqu'il a été introduit. Cependant l'introduction du composé organique lors de sa préparation a permis d'augmenter la dispersion de la phase active menant ainsi à un catalyseur plus actif.

Lorsqu'un composé organique est présent, le catalyseur n'est de préférence pas soumis à une calcination. On entend ici par calcination un traitement thermique sous un gaz contenant de l'air ou de l'oxygène à une température supérieure ou égale à 200°C.

Cependant, le précurseur de catalyseur peut subir une étape de calcination avant l'introduction du composé organique, notamment après l'imprégnation du nickel, du molybdène et du tungstène, et du phosphore.

Le catalyseur selon l'invention peut être un catalyseur frais, c'est-à-dire un catalyseur qui n'a pas été utilisé comme catalyseur auparavant dans une unité catalytique et notamment en hydrotraitement et/ou hydrocraquage.

Le catalyseur selon l'invention peut aussi être un catalyseur régénéré et/ou réjuvéné. On entend par un catalyseur régénéré et/ou réjuvéné un catalyseur qui a été utilisé en tant que catalyseur dans une unité catalytique et notamment en hydrotraitement et/ou hydrocraquage et qui a été soumis à au moins une étape d'élimination partielle ou totale du coke par exemple par calcination (régénération). La régénération peut être réalisée par tous les moyens connus de l'Homme du métier. La régénération est en général réalisée par calcination à des températures comprises entre 350 et 550°C, et le plus souvent entre 400 et 520°C, ou entre 420 et 520°C, ou encore entre 450 et 520°C, des températures inférieures à 500°C étant souvent avantageuses.

Lorsque le catalyseur régénéré ne comprend plus assez de phase active, de phosphore ou qu'il présente un ratio ou des ratios en dehors des ratios décrits, le catalyseur régénéré peut être réjuvéné en introduisant un ou plusieurs précurseurs de la phase active et/ou le phosphore dans le catalyseur régénéré. Il est également possible d'introduire au moins un composé organique simultanément avec les métaux et le phosphore ou séparément. Le composé organique introduit peut être identique ou pas au composé organique du catalyseur frais lorsque ce catalyseur comportait un tel composé organique. Les conditions opératoires décrites ci-avant concernant la maturation, le séchage et la calcination optionnelle et la sulfuration optionnelle sont bien entendu applicables dans le cadre de ce dernier mode de réalisation.

Avant son utilisation pour la réaction d'hydrotraitement et/ou d'hydrocraquage, il est avantageux de transformer le catalyseur obtenu selon l'un des quelconques modes d'introduction décrit dans la présente invention en un catalyseur sulfuré afin de former son espèce active. Cette étape d'activation ou de sulfuration s'effectue par les méthodes bien connues de l'Homme de l'art, et avantageusement sous une atmosphère sulfo-réductrice en présence d'hydrogène et d'hydrogène sulfuré.

Selon une variante, le catalyseur est avantageusement soumis à une étape de sulfuration après b) de séchage ou l'étape c) de calcination optionnelle.

Ledit catalyseur est avantageusement sulfuré de manière *ex situ* ou *in situ*. Les agents sulfurants sont le gaz $H_2S$, le soufre élémentaire, le $CS_2$, les mercaptans, les sulfures et/ou polysulfures, les coupes hydrocarbonées à point d'ébullition inférieur à 400°C contenant des composes soufres ou tout autre composé contenant du soufre utilisé pour l'activation des charges hydrocarbures en vue de sulfurer le catalyseur. Lesdits composés contenant du soufre sont avantageusement choisis parmi les disulfures d'alkyle tel que par exemple le disulfure de diméthyle (DMDS), les sulfures d'alkyle, tel que par exemple le sulfure de diméthyle, les thiols tel que par exemple le n-butylmercaptan (ou 1-butanethiol) et les composés polysulfures de type tertiononylpolysulfure. Le catalyseur peut également être sulfuré par le soufre contenu dans la charge à désulfurer. De manière préférée, le catalyseur est sulfuré *in situ* en présence d'un agent sulfurant et d'une charge hydrocarbonée. De manière très préférée le catalyseur est sulfuré *in situ* en présence d'une charge hydrocarbonée additivée de disulfure de diméthyle.

**Procédé d'hydrotraitement et/ou hydrocraquage**

Enfin, un autre objet de l'invention est l'utilisation du catalyseur selon l'invention ou préparé selon le procédé de préparation selon l'invention dans des procédés d'hydrotraitement et/ou d'hydrocraquage de coupes hydrocarbonées.

Le catalyseur selon l'invention et ayant de préférence préalablement subi une étape de sulfuration est avantageusement utilisé pour les réactions d'hydrotraitement et/ou d'hydrocraquage de charges hydrocarbonées telles que les coupes pétrolières, les coupes issues du charbon ou les hydrocarbures produits à partir du gaz naturel, éventuellement en mélanges ou encore à partir d'une coupe hydrocarbonée issue de la biomasse et plus particulièrement pour les réactions d'hydrogénation, d'hydrodéazotation, d'hydrodésaromatisation, d'hydrodésulfuration, d'hydrodéoxygénation, d'hydrodémétallation ou d'hydroconversion de charges hydrocarbonées.

Dans ces utilisations, le catalyseur selon l'invention et ayant de préférence préalablement subi une étape de sulfuration présente une activité améliorée par rapport aux catalyseurs de l'art antérieur. Ce catalyseur peut aussi avantageusement être utilisé lors du prétraitement des charges de craquage catalytique ou d'hydrocraquage, ou l'hydrodésulfuration des résidus ou l'hydrodésulfuration poussée des gazoles (ULSD Ultra Low Sulfur Diesel selon la terminologie anglo-saxonne).

Les charges employées dans le procédé d'hydrotraitement sont par exemple des essences, des gazoles, des gazoles sous vide, des résidus atmosphériques, des résidus sous vide, des distillats atmosphériques, des distillats sous vide, des fuels lourds, des huiles, des cires et des paraffines, des huiles usagées, des résidus ou des bruts désasphaltés, des charges provenant des procédés de conversions thermiques ou catalytiques, des charges lignocellulosiques ou plus généralement des charges issues de la biomasse telles que des huiles végétales, prises seules ou en mélange. Les charges qui sont traitées, et en particulier celles citées ci-dessus, contiennent généralement des hétéroatomes tels que le soufre, l'oxygène et l'azote et, pour les charges lourdes, elles contiennent le plus souvent également des métaux.

Les conditions opératoires utilisées dans les procédés mettant en oeuvre les réactions d'hydrotraitement de charges hydrocarbonées décrites ci-dessus sont généralement les suivantes : le température est avantageusement comprise entre 180 et 450 °C, et de préférence entre 250 et 440 °C, la pression est avantageusement comprise entre 0,5 et 30 MPa, et de préférence entre 1 et 18 MPa, la vitesse volumique horaire est avantageusement comprise entre 0,1 et 20 $h^{-1}$ et de préférence entre 0,2 et 5 $h^{-1}$, et le rapport hydrogène/charge exprimé en volume d'hydrogène, mesuré dans les conditions normales de température et pression, par volume de charge liquide est avantageusement compris entre 50 l/l à 5000 l/l et de préférence 80 à 2000 l/l.

Selon un premier mode d'utilisation, ledit procédé d'hydrotraitement selon l'invention est un procédé d'hydrotraitement, et notamment d'hydrodésulfuration (HDS) d'une coupe gazole réalisé en présence d'au moins un catalyseur selon l'invention. Ledit procédé d'hydrotraitement selon l'invention vise à éliminer les composés soufrés présents dans ladite coupe gazole de façon à atteindre les normes environnementales en vigueur, à savoir une teneur en soufre autorisée jusqu'à 10 ppm. Il permet aussi de réduire les teneurs en aromatiques et en azote de la coupe gazole à hydrotraiter.

Ladite coupe gazole à hydrotraiter selon le procédé de l'invention contient de 0,02 à 5,0 % poids de soufre. Elle est avantageusement issue de la distillation directe (ou gazole straight run selon la terminologie anglo-saxonne), d'une unité de cokéfaction (coking selon la terminologie anglo-saxonne), d'une unité de viscoréduction (visbreaking selon la terminologie anglo-saxonne), d'une unité de vapocraquage (steam cracking selon la terminologie anglo-saxonne), d'une unité d'hydrotraitement et/ou d'hydrocraquage de charges plus lourdes et/ou d'une unité de craquage catalytique (Fluid Catalytic Cracking selon la terminologie anglo-saxonne). Ladite coupe gazole présente préférentiellement au moins 90% des composés dont la température d'ébullition est comprise entre 250°C et 400°C à pression atmosphérique.

Le procédé d'hydrotraitement de ladite coupe gazole selon l'invention est mis en oeuvre dans les conditions opératoires suivantes : une température comprise entre 200°C et 400°C, préférentiellement entre 300°C et 380°C, une pression totale comprise entre 2 MPa et 10 MPa et plus préférentiellement entre 3 MPa et 8 MPa avec un ratio volume d'hydrogène par volume de charge hydrocarbonée, exprimé en volume d'hydrogène, mesuré dans les conditions normales de température et pression, par volume de charge liquide, compris entre 100 et 600 litres par litre et plus préférentiellement entre 200 et 400 litres par litre et une vitesse volumique horaire (VVH) comprise entre 0,5 et 10 h$^{-1}$, préférentiellement entre 0,7 et 8 h$^{-1}$. La VVH correspond à l'inverse du temps de contact exprimée en heure et est définie par le rapport du débit volumique de charge hydrocarbonée liquide par le volume de catalyseur chargé dans l'unité réactionnelle mettant en oeuvre le procédé d'hydrotraitement selon l'invention. L'unité réactionnelle mettant en oeuvre le procédé d'hydrotraitement de ladite coupe gazole selon l'invention est préférentiellement opérée en lit fixe, en lit mobile ou en lit bouillonnant, de préférence en lit fixe.

Selon un second mode d'utilisation, ledit procédé d'hydrotraitement et/ou d'hydrocraquage selon l'invention est un procédé d'hydrotraitement (notamment hydrodésulfuration, hydrodéazoation, hydrogénation des aromatiques) et/ou d'hydrocraquage d'une coupe de distillat sous vide réalisé en présence d'au moins un catalyseur selon l'invention. Ledit procédé d'hydrotraitement et/ou d'hydrocraquage, autrement appelé procédé de prétraitement d'hydrocraquage ou d'hydrocraquage selon l'invention vise selon les cas à éliminer les composés soufrés, azotés ou aromatiques présents dans ladite coupe distillat de façon à effectuer un prétraitement avant conversion dans des procédés de craquage catalytique ou d'hydroconversion, ou à hydrocraquer la coupe distillat qui aurait éventuellement été prétraitée auparavant si besoin.

Des charges très variées peuvent être traitées par les procédés d'hydrotraitement et/ou d'hydrocraquage de distillats sous vide décrits ci-dessus. Généralement elles contiennent au moins 20% volume et souvent au moins 80% volume de composés bouillant au-dessus de 340°C à pression atmosphérique. La charge peut être par exemple des distillats sous vide ainsi que des charges provenant d'unités d'extraction d'aromatiques des bases d'huile lubrifiante ou issues du déparaffinage au solvant des bases d'huile lubrifiante, et/ou d'huiles désasphaltées, ou encore la charge peut être une huile désasphaltée ou des paraffines issues du procédé Fischer-Tropsch ou encore tout mélange des charges précédemment citées. En général, les charges ont un point d'ébullition T5 supérieur à 340°C à pression atmosphérique, et mieux encore supérieur à 370°C à pression atmosphérique, c'est à dire que 95% des composés présents dans la charge ont un point d'ébullition supérieur à 340°C, et mieux encore supérieur à 370°C. La teneur en azote des charges traitées dans les procédés selon l'invention est usuellement supérieure à 200 ppm poids, de préférence comprise entre 500 et 10 000 ppm poids. La teneur en soufre des charges traitées dans les procédés selon l'invention est usuellement comprise entre 0,01 et 5,0 % poids. La charge peut éventuellement contenir des métaux (par exemple le nickel et vanadium). La teneur en asphaltènes est généralement inférieure à 3 000 ppm poids.

Le catalyseur d'hydrotraitement et/ou d'hydrocraquage est généralement mis en contact, en présence d'hydrogène, avec les charges décrites précédemment, à une température supérieure à 200°C, souvent comprise entre 250°C et 480°C, avantageusement comprise entre 320°C et 450°C, de préférence entre 330°C et 435°C, sous une pression supérieure à 1 MPa, souvent comprise entre 2 et 25 MPa, de manière préférée entre 3 et 20 MPa, la vitesse volumique étant comprise entre 0,1 et 20,0 h$^{-1}$ et de préférence 0,1-6,0 h$^{-1}$, de préférence, 0,2-3,0 h$^{-1}$, et la quantité d'hydrogène introduite est telle que le rapport volumique litre d'hydrogène/litre d'hydrocarbure, exprimé en volume d'hydrogène, mesuré dans les conditions normales de température et pression, par volume de charge liquide, soit compris entre 80 et 5 000 l/l et le plus souvent entre 100 et 2 000 l/l. Ces conditions opératoires utilisées dans les procédés selon l'invention permettent généralement d'atteindre des conversions par passe, en produits ayant des points d'ébullition inférieurs à 340°C à pression atmosphérique, et mieux inférieurs à 370°C à pression atmosphérique, supérieures à 15% et de manière encore plus préférée comprises entre 20 et 95%.

Les procédés d'hydrotraitement et/ou d'hydrocraquage de distillats sous vide mettant en oeuvre les catalyseurs selon l'invention couvrent les domaines de pression et de conversion allant de l'hydrocraquage doux à l'hydrocraquage haute pression. On entend par hydrocraquage doux, un hydrocraquage conduisant à des conversions modérées, généralement inférieures à 40%, et fonctionnant à basse pression, généralement entre 2 MPa et 6 MPa.

Le catalyseur selon l'invention peut être utilisé seul, en un seul ou plusieurs lits catalytiques en lit fixe, dans un ou plusieurs réacteurs, dans un schéma d'hydrocraquage dit en une étape, avec ou sans recyclage liquide de la fraction non convertie, ou encore dans un schéma d'hydrocraquage dit en deux étapes, éventuellement en association avec un catalyseur d'hydroraffinage situé en amont du catalyseur de la présente invention.

Selon un troisième mode d'utilisation, ledit procédé d'hydrotraitement et/ou d'hydrocraquage selon l'invention est avantageusement mis en oeuvre comme prétraitement dans un procédé de craquage catalytique à lit fluidisé (ou procédé FCC pour Fluid Catalytic Cracking selon la terminologie anglo-saxonne). Les conditions opératoires du prétraitement en termes de gamme de température, pression, taux de recyclage d'hydrogène, vitesse volumique horaire sont généralement identiques à celles décrites ci-dessus pour les procédés d'hydrotraitement et/ou d'hydrocraquage de distillats sous vide. Le procédé FCC peut être exécuté de manière classique connue des hommes du métier dans les conditions adéquates de craquage en vue de produire des produits hydrocarbonés de plus faible poids moléculaire. On trouvera par exemple une description sommaire du craquage catalytique dans ULLMANS ENCYCLOPEDIA OF INDUSTRIAL CHEMISTRY VOLUME A 18, 1991, pages 61 à 64.

Selon un quatrième mode d'utilisation, ledit procédé d'hydrotraitement et/ou d'hydrocraquage selon l'invention est un procédé d'hydrotraitement (notamment hydrodésulfuration) d'une coupe d'essence en présence d'au moins un catalyseur selon l'invention.

Contrairement à d'autres procédés d'hydrotraitement, l'hydrotraitement (notamment l'hydrodésulfuration) des essences doit permettre de répondre à une double contrainte antagoniste : assurer une hydrodésulfuration profonde des essences et limiter l'hydrogénation des composés insaturés présents afin de limiter la perte d'indice d'octane.

La charge est généralement une coupe d'hydrocarbures ayant un intervalle de distillation compris entre 30 et 260°C. De préférence, cette coupe d'hydrocarbures est une coupe du type essence. De manière très préférée, la coupe essence est une coupe essence oléfinique issue par exemple d'une unité de craquage catalytique (Fluid Catalytic Cracking selon la terminologie anglo-saxonne).

Le procédé d'hydrotraitement consiste à mettre en contact la coupe d'hydrocarbures avec le catalyseur selon l'invention et de l'hydrogène dans les conditions suivantes: à une température comprise entre 200 et 400°C, de préférence comprise entre 230 et 330°C, à une pression totale comprise entre 1 et 3 MPa, de préférence comprise entre 1,5 et 2,5 MPa, à une Vitesse Volumique Horaire (WH), définie comme étant le débit volumique de charge rapporté au volume de catalyseur, comprise entre 1 et 10 h$^{-1}$, de préférence comprise entre 2 et 6 h$^{-1}$ et à un rapport volumique hydrogène/charge essence compris entre 100 et 600 Nl/l, de préférence compris entre 200 et 400 Nl/l.

Le procédé d'hydrotraitement des essences peut être réalisé dans un ou plusieurs réacteurs en série du type lit fixe ou du type lit bouillonnant. Si le procédé est mis en oeuvre au moyen d'au moins deux réacteurs en série, il est possible de prévoir un dispositif d'élimination de l'$H_2S$ de l'effluent issu du premier réacteur d'hydrodésulfuration avant de traiter ledit effluent dans le deuxième réacteur d'hydrodésulfuration.

## EXEMPLES

Les exemples qui suivent démontrent le gain d'activité important sur les catalyseurs selon l'invention par rapport aux catalyseurs de l'art antérieur.

Les exemples 1 à 10 décrivent la préparation de catalyseurs C1 à C10. La composition finale de chaque catalyseur en métaux et en phosphore, exprimée sous forme d'oxydes et rapportée au poids du catalyseur, ainsi que les ratios $WO_3/MoO_3$, $NiO/(WO_3+MoO_3)$ et $P_2O_5/(WO_3+MoO_3)$ figurent dans le tableau1 ci-dessous.

Les exemples 1 à 6 décrivent la préparation de catalyseurs C1 à C6 non-conformes à l'invention ayant un ratio $WO_3/MoO_3$, $NiO/(WO_3+MoO_3)$ ou $P_2O_5/(WO_3+MoO_3)$ respectivement en dessous et en dessus de la gamme revendiquée.

Les exemples 7 à 10 décrivent la préparation de catalyseurs C7 à C10 conformes à l'invention ayant un ratio $WO_3/MoO_3$, $NiO/(WO_3+MoO_3)$ ou $P_2O_5/(WO_3+MoO_3)$ respectivement dans la gamme revendiquée.

**Exemple 1 : Préparation du catalyseur NiMoWP sur alumine C1 (non-conforme à l'invention).**

Sur 100 grammes d'un support d'alumine A1 présentant une perte au feu de 4,9 %pds, une surface BET de 230 m$^2$/g, un volume poreux mesuré par porosimétrie au mercure de 0,78 ml/g et un diamètre moyen des pores de 11,5 nm défini comme le diamètre médian en volume par porosimétrie au mercure et qui se présente sous la forme « extrudé », on ajoute du nickel, du molybdène, du tungstène et du phosphore. La solution d'imprégnation est préparée par dissolution à 90°C de l'oxyde de molybdène (16,5 g), de métatungstate d'ammonium (55,9 g), de nitrate de nickel (25,8 g) et 10,2 grammes d'une solution d'acide orthophosphorique à 85 % poids dans 78 mL d'eau distillée. Après imprégnation à sec, les extrudés sont laissés à maturer en atmosphère saturée en eau pendant 24 h à température ambiante, puis ils sont séchés à 90°C pendant 16 h. Le catalyseur séché ainsi obtenu est noté C1.

**Exemple 2 : Préparation du catalyseur NiMoWP sur alumine C2 (non-conforme à l'invention).**

Sur le même support A1 que présenté dans l'exemple 1, on ajoute du nickel, du molybdène, du tungstène et du phosphore. La solution d'imprégnation est préparée par dissolution à 90°C de l'oxyde de molybdène (1,9 g), de métatungstate d'ammonium (82,5 g), de nitrate de nickel (25,8 g) et 10,2 grammes d'une solution d'acide orthophosphorique à 85 % poids dans 78 mL d'eau distillée. Après imprégnation à sec, les extrudés sont laissés à maturer en atmosphère saturée en eau pendant 24 h à température ambiante, puis ils sont séchés à 90°C pendant 16 h. Le catalyseur séché ainsi obtenu est noté C2.

**Exemple 3 : Préparation du catalyseur NiMoWP sur alumine C3 (non-conforme à l'invention).**

Sur le même support A1 que présenté dans l'exemple 1, on ajoute du nickel, du molybdène, du tungstène et du phosphore. La solution d'imprégnation est préparée par dissolution à 90°C de l'oxyde de molybdène (6,1 g), de métatungstate d'ammonium (74,8 g), de nitrate de nickel (18,2 g) et 10,2 grammes d'une solution d'acide orthophosphorique à 85 % poids dans 78 mL d'eau distillée. Après imprégnation à sec, les extrudés sont laissés à maturer en atmosphère saturée en eau pendant 24 h à température ambiante, puis ils sont séchés à 90°C pendant 16 h. Le catalyseur séché ainsi obtenu est noté C3.

**Exemple 4 : Préparation du catalyseur NiMoWP sur alumine C4 (non-conforme à l'invention).**

Sur le même support A1 que présenté dans l'exemple 1, on ajoute du nickel, du molybdène, du tungstène et du phosphore. La solution d'imprégnation est préparée par dissolution à 90°C de l'oxyde de molybdène (6,1 g), de métatungstate d'ammonium (74,8 g), de nitrate de nickel (35,4 g) et 10,2 grammes d'une solution d'acide orthophosphorique à 85 % poids dans 78 mL d'eau distillée. Après imprégnation à sec, les extrudés sont laissés à maturer en atmosphère saturée en eau pendant 24 h à température ambiante, puis ils sont séchés à 90°C pendant 16 h. Le catalyseur séché ainsi obtenu est noté C4.

**Exemple 5 : Préparation du catalyseur NiMoWP sur alumine C5 (non-conforme à l'invention).**

Sur le même support A1 que présenté dans l'exemple 1, on ajoute du nickel, du molybdène, du tungstène et du phosphore. La solution d'imprégnation est préparée par dissolution à 90°C de l'oxyde de molybdène (6,1 g), de métatungstate d'ammonium (74,8 g), de nitrate de nickel (25,8 g) et 7,2 grammes d'une solution d'acide orthophosphorique à 85 % poids dans 78 mL d'eau distillée. Après imprégnation à sec, les extrudés sont laissés à maturer en atmosphère saturée en eau pendant 24 h à température ambiante, puis ils sont séchés à 90°C pendant 16 h. Le catalyseur séché ainsi obtenu est noté C5.

**Exemple 6 : Préparation du catalyseur NiMoWP sur alumine C6 (non-conforme à l'invention).**

Sur le même support A1 que présenté dans l'exemple 1, on ajoute du nickel, du molybdène, du tungstène et du phosphore. La solution d'imprégnation est préparée par dissolution à 90°C de l'oxyde de molybdène (6,1 g), de métatungstate d'ammonium (74,8 g), de nitrate de nickel (25,8 g) et 14,0 grammes d'une solution d'acide orthophosphorique à 85 % poids dans 78 mL d'eau distillée. Après imprégnation à sec, les extrudés sont laissés à maturer en atmosphère saturée en eau pendant 24 h à température ambiante, puis ils sont séchés à 90°C pendant 16 h. Le catalyseur séché ainsi obtenu est noté C6.

**Exemple 7 : Préparation du catalyseur NiMoWP sur alumine C7 (conforme à l'invention).**

Sur le même support A1 que présenté dans l'exemple 1, on ajoute du nickel, du molybdène, du tungstène et du phosphore. La solution d'imprégnation est préparée par dissolution à 90°C de l'oxyde de molybdène (6,1 g), de métatungstate d'ammonium (74,8 g), de nitrate de nickel (25,8 g) et 10,2 grammes d'une solution d'acide orthophosphorique à 85 % poids dans 78 mL d'eau distillée. Après imprégnation à sec, les extrudés sont laissés à maturer en atmosphère saturée en eau pendant 24 h à température ambiante, puis ils sont séchés à 90°C pendant 16 heures. Le catalyseur séché ainsi obtenu est noté C7.

**Exemple 8 : Préparation du catalyseur NiMoWP sur alumine C8 (conforme à l'invention) par co-imprégnation d'un composé organique (acide oxalique).**

Sur le support d'alumine décrit précédemment dans l'exemple 1 et qui se présente sous la forme «extrudé », on ajoute du nickel, du molybdène, du tungstène et du phosphore. La solution d'imprégnation est préparée par dissolution à 90°C de l'oxyde de molybdène (4,3 g), de métatungstate d'ammonium (70,5 g), de nitrate de nickel (21,8 g) et 9,3 grammes d'une solution d'acide orthophosphorique à 85 % poids dans 78 mL d'eau distillée. Après homogénéisation du mélange précédent, 6,7 g d'acide oxalique ont été ajoutés avant ajustement du volume de solution au volume poreux du support par addition d'eau. Le rapport molaire (acide oxalique)/(Mo+W) est égal à 0,25 mol/mol et celui (acide oxalique)/Ni est égal à 1 mol/mol. Après imprégnation à sec, les extrudés sont laissés à maturer en atmosphère saturée en eau pendant 24 h à température ambiante, puis ils sont séchés à 120°C pendant 16 h. Le catalyseur séché et additivé d'acide oxalique ainsi obtenu est noté C8.

**Exemple 9 : Préparation du catalyseur NiMoWP sur alumine C9 (conforme à l'invention) par post-additivation d'un composé organique (acide ascorbique).**

On imprègne 100 g de précurseur de catalyseur C7 décrit précédemment dans l'exemple 3 et qui se présente sous la forme « extrudé » avec une solution aqueuse contenant 28,8 g d'acide ascorbique et dont le volume est égal au volume poreux du précurseur de catalyseur C7. Les quantités engagées sont telles que la quantité d'acide ascorbique est de 0,5 mole par moles de molybdène et de tungstène (correspondant à 1,9 moles par mole de nickel). Les extrudés sont laissés à maturer en atmosphère saturée en eau pendant 16 h à température ambiante. Le précurseur de catalyseur C9 est alors séché à 120°C durant 2 heures pour donner le catalyseur C9.

**Exemple 10 : Préparation du catalyseur NiMoWP sur silice-alumine C10 (conforme à l'invention) par post-additivation d'un composé organique (1-méthyl-2-pyrrolidinone).**

Sur un support de silice-alumine contenant 10 % poids de silicium et présentant une perte au feu de 0,7 % poids, une surface BET de 249 m$^2$/g, un volume poreux mesuré par porosimétrie au mercure de 0,45 ml/g et un diamètre moyen des pores de 7,3 nm défini comme le diamètre médian en volume par porosimétrie au mercure et qui se présente sous la forme « extrudé », on ajoute du nickel, du molybdène, du tungstène et du phosphore. La solution d'imprégnation est préparée par dissolution à 90°C de l'oxyde de molybdène (4,6 g), de métatungstate d'ammonium (75,8 g), de nitrate de nickel (25,3 g) et 11,1 grammes d'une solution d'acide orthophosphorique à 85 % poids dans 55,7 mL d'eau distillée. Après imprégnation à sec, les extrudés sont laissés à maturer en atmosphère saturée en eau pendant 24 h à température ambiante, puis ils sont séchés à 90°C pendant 16 h. Le précurseur de catalyseur est alors imprégné avec une solution aqueuse contenant 25,9 g de 1-méthyl-2-pyrrolidinone et dont le volume est égal au volume poreux du précurseur de catalyseur C7. Les quantités engagées sont telles que la quantité de 1-méthyl-2-pyrrolidinone est de 0,8 mole par moles de molybdène et de tungstène (correspondant à 3,0 moles par mole de nickel). Les extrudés sont laissés à maturer en atmosphère saturée en eau pendant 16 h à température ambiante. Le précurseur de catalyseur C10 est alors séché à 120°C durant 2 heures pour donner le catalyseur C10.

**Exemple 11 : Préparation du catalyseur NiMoWP sur alumine C11 (comparatif).**

Sur le même support A1 que présenté dans l'exemple 1, on ajoute du nickel, du molybdène, du tungstène et du phosphore. La solution d'imprégnation est préparée par dissolution à 90° C de l'oxyde de molybdène (7.7g), de métatungstate d'ammonium (85,3 g), de nitrate de nickel (37,6 g) et 7,5 grammes d'une solution d'acide orthophosphorique à 85 % poids dans 78 mL d'eau distillée. Après imprégnation à sec, les extrudés sont laissés à maturer en atmosphère saturée en eau pendant 24 h à température ambiante, puis ils sont séchés à 90° C pendant 16 heures. Le catalyseur séché ainsi obtenu est noté C11.

**Exemple 12 : Préparation du catalyseur NiMoWP sur alumine C12 (comparatif) par post-additivation d'un composé organique (acide citrique ).**

On imprègne 100 g de précurseur de catalyseur C11 et qui se présente sous la forme « extrudé » avec une solution aqueuse contenant 7,8 g d'acide citrique et dont le volume est égal au volume poreux du précurseur de catalyseur C11. Les quantités engagées sont telles que le rapport molaire (acide citrique)/(NiO + MoO$_3$ + WO$_3$) est de 0,08. Les extrudés sont laissés à maturer en atmosphère saturée en eau pendant 16 h à température ambiante. Le précurseur de catalyseur C12 est alors séché à 120°C durant 2 heures pour donner le catalyseur C12.

**Exemple 13 : Préparation du catalyseur NiMoWP sur alumine C13 (conforme à l'invention) par post-additivation d'un composé organique (acide citrique).**

On imprègne 100 g de précurseur de catalyseur C7 de la demande et qui se présente sous la forme « extrudé » avec une solution aqueuse contenant 6,4 g d'acide citrique et dont le volume est égal au volume poreux du précurseur de catalyseur C7. Les quantités engagées sont telles que le rapport molaire (acide citrique)/(NiO + $MoO_3$ + $WO_3$) est de 0,08. Les extrudés sont laissés à maturer en atmosphère saturée en eau pendant 16 h à température ambiante. Le précurseur de catalyseur C13 est alors séché à 120°C durant 2 heures pour donner le catalyseur C13.

**Exemple 14 : Evaluation en hydrogénation des aromatiques (HDA) de gazole des catalyseurs C1, C2, C3, C4, C5, C6, C11, C12 (non conformes à l'invention) et C7, C8, C9, C10, C13 (conformes à l'invention).**

Les catalyseurs C1, C2, C3, C4, C5, C6, C11 et C12 (non conformes à l'invention) et C7, C8, C9, C10 et C13 (conformes à l'invention) ont été testés en hydrogénation des aromatiques (HDA) de gazole.

La charge est un mélange de 30 % volume gazole issu de distillation atmosphérique (aussi appelé straight-run selon la terminologie anglo-saxonne) et 70 % volume de gazole léger issu d'une unité de craquage catalytique (aussi appelé LCO pour light cycle oil selon la terminologie anglo-saxonne ). Les caractéristiques de la charge de test utilisée sont les suivantes : densité à 15 °C= 0,8994 $g/cm^3$ (NF EN ISO 12185), indice de réfraction à 20°C = 1,5143 (ASTM D1218-12), teneur en soufre = 0,38% en poids, teneur en azote = 0,05% en poids.

• Distillation Simulée (ASTM D2887) :

| | |
|---|---|
| - PI | : 133 °C |
| - 10 % | : 223 °C |
| - 50 % | : 285 °C |
| - 90 % | : 357 °C |
| - PF | : 419 °C |

Le test est mené dans un réacteur pilote isotherme à lit fixe traversé, les fluides circulant de bas en haut.

Les catalyseurs sont préalablement sulfurés in situ à 350°C dans le réacteur sous pression au moyen d'une charge gazole de distillation atmosphérique (straight run selon la terminologie anglo-saxonne) (densité à 15 °C= 0,8491 $g/cm^3$ (NF EN ISO 12185) et teneur initiale en soufre = 0,42% pds), à laquelle est additionnée 2% en poids de diméthyldisulfure.

Les tests d'hydrogénation des aromatiques ont été conduits dans les conditions opératoires suivantes : une pression totale de 8 MPa, un volume de catalyseur de 4 $cm^3$, une température de 330°C, avec un débit d'hydrogène de 3,0 L/h et avec un débit de charge de 4,5 $cm^3$/h.

Les caractéristiques des effluents sont analysées : densité à 15 °C (NF EN ISO 12185), indice de réfraction à 20°C (ASTM D1218-12), distillation simulée (ASTM D2887), teneur en soufre et teneur en azote. Les teneurs en carbone aromatique résiduelles sont calculées par la méthode n-d-M (ASTM D3238). Le taux d'hydrogénation des aromatiques est calculé comme le ratio de la teneur en carbone aromatique des effluents sur celui de la charge de test. Les performances catalytiques des catalyseurs testés sont données dans le Tableau 1. Elles sont exprimées en activité volumique relative (RVA) par rapport au catalyseur C7 choisi comme référence, en supposant un ordre d'1,7 pour la réaction concernée.

Le Tableau 1 montre clairement le gain sur l'effet catalytique apporté par les formulations spécifiques selon l'invention. En effet, les catalyseur C1, C2, C3, C4, C5, C6, C11 et C12 (non conformes) présentent une activité inférieure à celle obtenue pour le catalyseur C7 (selon l'invention). Les catalyseurs C8, C9, C10 et C13 (selon l'invention) présentent également des activités supérieures au catalyseur C7.

Le Tableau 1 montre clairement le gain sur l'effet catalytique apporté par les formulations spécifiques selon l'invention. En effet, le catalyseur non additivé C11 (comparatif) présente une activité inférieure à celle obtenue pour le catalyseur non additivé C7 (selon l'invention). De même, le catalyseur additivé C12 (comparatif) présente une activité inférieure à celle obtenue pour le catalyseur additivé C13 (selon l'invention). Pour les deux comparaisons, seuls les teneurs en métaux et phosphore et les ratios ont été modifiés.

L'avantage des catalyseurs selon l'invention est donc significatif quel que soit leur mode de préparation, avec ainsi une efficacité supérieure à celle des autres composés de l'art antérieur existant.

*Tableau 1 : Activités relatives à iso-volume en hydrogénation des aromatiques de gazole des catalyseurs C1, C2, C3, C4, C5 et C6, ainsi que C11 et C12 (non conformes à l'invention) et C8, C9, C10 et C13 (conformes à l'invention) par rapport au catalyseur C7 (conforme).*

| Catalyseur | % poids NiO | % poids MoO$_3$ | % poids WO$_3$ | % poids P$_2$O$_5$ | WO$_3$/MoO$_3$ (mol./mol.) | NiO/ (WO$_3$+MoO$_3$) (mol./mol.) | P$_2$O$_5$/ (WO$_3$+MoO$_3$) (mol./mol.) | RVA |
|---|---|---|---|---|---|---|---|---|
| C1 (comp) | 3,8 | 9,5 | 28,4 | 3,6 | 1,9 | 0,27 | 0,27 | 66 |
| C2 (comp) | 3,6 | 1,0 | 39,9 | 3,4 | 24 | 0,27 | 0,27 | 87 |
| C3 (comp) | 2,6 | 3,4 | 37,0 | 3,5 | 6,7 | 0,19 | 0,27 | 80 |
| C4 (comp) | 5,0 | 3,4 | 36,1 | 3,4 | 6,7 | 0,37 | 0,27 | 90 |
| C5 (comp) | 3,7 | 3,4 | 37,0 | 2,5 | 6,7 | 0,27 | 0,19 | 85 |
| C6 (comp) | 3,6 | 3,4 | 36,2 | 4,7 | 6,7 | 0,27 | 0,37 | 91 |
| C7 (inv) | 3,7 | 3,4 | 36,6 | 3,5 | 6,7 | 0,27 | 0,27 | 100 |
| C8 (inv) | 3,4 | 2,5 | 38,4 | 3,5 | 9,5 | 0,25 | 0,27 | 110 |
| C9 (inv) | 3,7 | 3,4 | 36,6 | 3,5 | 6,7 | 0,27 | 0,27 | 108 |
| C10 (inv) | 3,5 | 2,5 | 36,3 | 3,7 | 9 | 0,27 | 0,30 | 112 |
| C11 (comp) | 5,0 | 4,0 | 39,1 | 2,4 | 6,1 | 0,34 | 0,086 | 72 |
| C12 (comp) | 5,0 | 4,0 | 39,1 | 2,4 | 6,1 | 0,34 | 0,086 | 80 |
| C13 (inv) | 3,7 | 3,4 | 36,6 | 3,5 | 6,7 | 0,27 | 0,27 | 106 |

**Revendications**

1. Catalyseur comprenant un support à base d'alumine ou de silice ou de silice-alumine, une phase active constituée de nickel, de molybdène et de tungstène, et du phosphore, **caractérisé en ce que** :

   - la teneur en nickel, mesurée sous forme NiO, est comprise entre 3 et 4 % poids par rapport au poids total du catalyseur,
   - la teneur en molybdène, mesurée sous forme MoOs, est comprise entre 2 et 4 % poids par rapport au poids total du catalyseur,
   - la teneur en tungstène, mesurée sous forme WO$_3$, est comprise entre 34 et 40 % poids par rapport au poids total du catalyseur,
   - la teneur en phosphore, mesurée sous forme P$_2$O$_5$, est comprise entre 3 et 4 % poids par rapport au poids total du catalyseur,
   - le ratio molaire WO$_3$/MoO$_3$ est compris entre 5,3 et 12,4 mol/mol,
   - le ratio molaire NiO/(WO$_3$+MoO$_3$) est compris entre 0,20 et 0,33 mol/mol,
   - le ratio molaire P$_2$O$_5$/(WO$_3$+MoO$_3$) est compris entre 0,21 et 0,34 mol/mol.

2. Catalyseur selon la revendication 1 **caractérisé en ce que** :

   - la teneur en nickel, mesurée sous forme NiO, est comprise entre 3,1 et 3,9 % poids par rapport au poids total du catalyseur,
   - la teneur en molybdène, mesurée sous forme MoOs, est comprise entre 2,2 et 3,8 % poids par rapport au poids total du catalyseur,
   - la teneur en tungstène, mesurée sous forme WO$_3$, est comprise entre 35 et 39,9 % poids par rapport au poids total du catalyseur,
   - la teneur en phosphore, mesurée sous forme P$_2$O$_5$, est comprise entre 3,1 et 3,9 % poids par rapport au poids total du catalyseur,
   - le ratio molaire WO$_3$/MoO$_3$ est compris entre 5,7 et 11,1 mol/mol,
   - le ratio molaire NiO/(WO$_3$+MoO$_3$) est compris entre 0,21 et 0,31 mol/mol,
   - le ratio molaire P$_2$O$_5$/(WO$_3$+MoO$_3$) est compris entre 0,22 et 0,33 mol/mol.

3. Catalyseur selon la revendication 2, **caractérisé en ce que** :

    - la teneur en nickel, mesurée sous forme NiO, est comprise entre 3,2 et 3,8 % poids par rapport au poids total du catalyseur,
    - la teneur en molybdène, mesurée sous forme $MoO_3$, est comprise entre 2,5 et 3,5 % poids par rapport au poids total du catalyseur,
    - la teneur en tungstène, mesurée sous forme $WO_3$, est comprise entre 36 et 39 % poids par rapport au poids total du catalyseur,
    - la teneur en phosphore, mesurée sous forme $P_2O_5$, est comprise entre 3,2 et 3,8 % poids par rapport au poids total du catalyseur,
    - le ratio molaire $WO_3/MoO_3$ est compris entre 6,4 et 9,7 mol/mol,
    - le ratio molaire $NiO/(WO_3+MoO_3)$ est compris entre 0,22 et 0,30 mol/mol,
    - le ratio molaire $P_2O_5/(WO_3+MoO_3)$ est compris entre 0,23 et 0,32 mol/mol.

4. Catalyseur selon l'une des revendications 1 à 3, dans lequel la densité en métaux du groupe VIB, exprimée en nombre d'atomes desdits métaux par unité de surface du catalyseur est comprise entre 5 et 12 atomes des métaux du groupe VIB par $nm^2$ de catalyseur.

5. Catalyseur selon l'une des revendications 1 à 4, lequel contient en outre un composé organique contenant de l'oxygène et/ou de l'azote et/ou du soufre.

6. Catalyseur selon la revendication 5, dans lequel le composé organique est choisi parmi un composé comportant une ou plusieurs fonctions chimiques choisies parmi une fonction carboxylique, alcool, thiol, thioéther, sulfone, sulfoxyde, éther, aldéhyde, cétone, ester, carbonate, amine, nitrile, imide, oxime, urée, amide ou encore les composés incluant un cycle furanique ou encore les sucres.

7. Catalyseur selon la revendication 6, dans lequel le composé organique est choisi parmi parmi la γ-valérolactone, la 2-acétylbutyrolactone, le triéthylèneglycol, le diéthylèneglycol, l'éthylèneglycol, l'acide éthylènediaminetétra-acétique (EDTA), l'acide maléique, l'acide malonique, l'acide citrique, l'acide acétique, l'acide oxalique, l'acide gluconique, le glucose, le fructose, le saccharose, le sorbitol, le xylitol, l'acide γ-cétovalérique, un succinate de dialkyle C1-C4 et plus particulièrement le succinate de diméthyle, le diméthylformamide, la 1-méthyl-2-pyrrolidinone, le carbonate de propylène, le 3-oxobutanoate de 2-méthoxyéthyle, la bicine, la tricine, le 2-furaldéhyde (aussi connu sous le nom furfural), le 5-hydroxyméthylfurfural, le 2-acétylfurane, le 5-méthyl-2-furaldéhyde, l'acide ascorbique, le lactate de butyle, le lactate d'éthyle, le butyryllactate de butyle, le 3-hydroxybutanoate d'éthyle, le 3-éthoxypropanoate d'éthyle, l'acétate de 2-éthoxyéthyle, l'acétate de 2-butoxyéthyle, l'acrylate de 2-hydroxyéthyle, la 1-vinyl-2-pyrrolidinone, la 1,3-diméthyl-2-imidazolidinone, le 1,5-pentanediol, la1-(2-hydroxyéthyl)-2-pyrrolidinone, la 1-(2-hydroxyéthyl)-2,5-pyrrolidinedione, la 5-méthyl-2(3H)-furanone, la 1-méthyl-2-pipéridinone, l'acide 4-aminobutanoïque, le glycolate de butyle, le 2-mercaptopropanoate d'éthyle, le 4-oxopentanoate d'éthyle, le maléate de diéthyle, le maléate de diméthyle, le fumarate de diméthyle, le fumarate de diéthyle, l'adipate de diméthyle et le 3-oxoglutarate de diméthyle.

8. Catalyseur selon l'une des revendications 5 à 7, dans lequel la teneur en composé organique est comprise entre 1 et 30 % poids par rapport au poids total du catalyseur.

9. Catalyseur selon l'une des revendications 1 à 8, étant au moins partiellement sulfuré.

10. Procédé de préparation d'un catalyseur selon l'une des revendications 1 à 9 comprenant les étapes suivantes :

    a) on met en contact au moins un précurseur de nickel, un précurseur de molybdène et un précurseur de tungstène et le phosphore avec un support à base d'alumine ou de silice ou de silice-alumine, de manière à obtenir un précurseur de catalyseur,
    b) on sèche ledit précurseur de catalyseur issu de l'étape a) à une température inférieure à 200°C.

11. Procédé de préparation d'un catalyseur selon la revendication 10 comprenant en outre une étape c) dans laquelle on calcine le catalyseur obtenu à l'étape b) à une température comprise entre 200°C et 550°C.

12. Procédé de préparation d'un catalyseur selon l'une des revendications 10 à 11 comprenant en outre une étape d) dans laquelle on sulfure le catalyseur obtenu à l'étape b) ou à l'étape c).

13. Utilisation du catalyseur selon l'une des revendications 1 à 9 dans un procédé d'hydrotraitement et/ou d'hydrocraquage de coupes hydrocarbonées.


**Patentansprüche**

1. Katalysator, umfassend einen Träger auf Basis von Aluminiumoxid oder Siliciumdioxid oder Siliciumdioxid-Aluminiumoxid, eine aktive Phase, die aus Nickel, Molybdän und Wolfram besteht, und Phosphor, **dadurch gekennzeichnet, dass**:

   - der Nickelgehalt, gemessen in NiO-Form, zwischen 3 und 4 Gew.-%, bezogen auf das Gesamtgewicht des Katalysators, liegt,
   - der Molybdängehalt, gemessen in $MoO_3$-Form, zwischen 2 und 4 Gew.-%, bezogen auf das Gesamtgewicht des Katalysators, liegt,
   - der Wolframgehalt, gemessen in $WO_3$-Form, zwischen 34 und 40 Gew.-%, bezogen auf das Gesamtgewicht des Katalysators, liegt,
   - der Phosphorgehalt, gemessen in $P_2O_5$-Form, zwischen 3 und 4 Gew.-%, bezogen auf das Gesamtgewicht des Katalysators, liegt,
   - das $WO_3/MoO_3$-Molverhältnis zwischen 5,3 und 12,4 mol/mol liegt,
   - das $NiO/(WO_3+MoO_3)$-Molverhältnis zwischen 0,20 und 0,33 mol/mol, liegt,
   - das $P_2O_5/(WO_3+MoO_3)$-Molverhältnis zwischen 0,21 und 0,34 mol/mol liegt.

2. Katalysator nach Anspruch 1, **dadurch gekennzeichnet, dass**:

   - der Nickelgehalt, gemessen in NiO-Form, zwischen 3,1 und 3,9 Gew.-%, bezogen auf das Gesamtgewicht des Katalysators, liegt,
   - der Molybdängehalt, gemessen in $MoO_3$-Form, zwischen 2,2 und 3,8 Gew.-%, bezogen auf das Gesamtgewicht des Katalysators, liegt,
   - der Wolframgehalt, gemessen in $WO_3$-Form, zwischen 35 und 39,9 Gew.-%, bezogen auf das Gesamtgewicht des Katalysators, liegt,
   - der Phosphorgehalt, gemessen in $P_2O_5$-Form, zwischen 3,1 und 3,9 Gew.-%, bezogen auf das Gesamtgewicht des Katalysators, liegt,
   - das $WO_3/MoO_3$-Molverhältnis zwischen 5,7 und 11,1 mol/mol liegt,
   - das $NiO/(WO_3+MoO_3)$-Molverhältnis zwischen 0,21 und 0,31 mol/mol, liegt,
   - das $P_2O_5/(WO_3+MoO_3)$-Molverhältnis zwischen 0,22 und 0,33 mol/mol liegt.

3. Katalysator nach Anspruch 2, **dadurch gekennzeichnet, dass**:

   - der Nickelgehalt, gemessen in NiO-Form, zwischen 3,2 und 3,8 Gew.-%, bezogen auf das Gesamtgewicht des Katalysators, liegt,
   - der Molybdängehalt, gemessen in $MoO_3$-Form, zwischen 2,5 und 3,5 Gew.-%, bezogen auf das Gesamtgewicht des Katalysators, liegt,
   - der Wolframgehalt, gemessen in $WO_3$-Form, zwischen 36 und 39 Gew.-%, bezogen auf das Gesamtgewicht des Katalysators, liegt,
   - der Phosphorgehalt, gemessen in $P_2O_5$-Form, zwischen 3,2 und 3,8 Gew.-%, bezogen auf das Gesamtgewicht des Katalysators, liegt,
   - das $WO_3/MoO_3$-Molverhältnis zwischen 6,4 und 9,7 mol/mol liegt,
   - das $NiO/(WO_3+MoO_3)$-Molverhältnis zwischen 0,22 und 0,30 mol/mol, liegt,
   - das $P_2O_5/(WO_3+MoO_3)$-Molverhältnis zwischen 0,23 0,32 mol/mol liegt.

4. Katalysator nach einem der Ansprüche 1 bis 3, wobei die Dichte von Metallen der Gruppe VIB, ausgedrückt als Zahl von Atomen der Metalle pro Flächeneinheit des Katalysators, zwischen 5 und 12 Atomen der Metalle der Gruppe VIB pro $nm^2$ Katalysator liegt.

5. Katalysator nach einem der Ansprüche 1 bis 4, der außerdem eine organische Verbindung enthält, die Sauerstoff und/oder Stickstoff und/oder Schwefel enthält.

6. Katalysator nach Anspruch 5, wobei die organische Verbindung aus einer Verbindung mit einer oder mehreren chemischen Funktionen, die aus einer Carboxyl-, Alkohol-, Thiol-, Thioether-, Sulfon-, Sulfoxid-, Ether-, Aldehyd-, Keton-, Ester-, Carbonat-, Amin-, Nitril-, Imid-, Oxim-, Harnstoff- oder Amidfunktion ausgewählt sind, oder auch Verbindungen mit einem Furanring oder auch Zuckern ausgewählt ist.

7. Katalysator nach Anspruch 6, wobei die organische Verbindung aus $\gamma$-Valerolacton, 2-Acetylbutyrolacton, Triethylenglykol, Diethylenglykol, Ethylenglykol, Ethylendiamintetraessigsäure (EDTA), Maleinsäure, Malonsäure, Citronensäure, Essigsäure, Oxalsäure, Gluconsäure, Glucose, Fructose, Saccharose, Sorbitol, Xylitol, $\gamma$-Ketovaleriansäure, einem Di($C_1$-$C_4$-alkyl)succinat und spezieller Dimethylsuccinat, Dimethylformamid, 1-Methyl-2-pyrrolidinon, Propylencarbonat, 2-Methoxyethyl-3-oxobutanoat, Bicin, Tricin, 2-Furaldehyd (auch unter dem Namen Furfural bekannt), 5-Hydroxymethylfurfural, 2-Acetylfuran, 5-Methyl-2-furaldehyd, Ascorbinsäure, Butyllactat, Ethyllactat, Butylbutyryllactat, Ethyl-3-hydroxybutanoat, Ethyl-3-ethoxypropanoat, 2-Ethoxyethylacetat, 2-Butoxyethylacetat, 2-Hydroxyethylacrylat, 1-Vinyl-2-pyrrolidinon, 1,3-Dimethyl-2-imidazolidinon, 1,5-Pentandiol, 1-(2-Hydroxyethyl)-2-pyrrolidinon, 1-(2-Hydroxyethyl)-2,5-pyrrolidindion, 5-Methyl-2(3H)-furanon, 1-Methyl-2-piperidinon, 4-Aminobutansäure, Butylglykolat, Ethyl-2-mercaptopropanoat, Ethyl-4-oxopentanoat, Diethylmaleat, Dimethylmaleat, Dimethylfumarat, Diethylfumarat, Dimethyladipat und Dimethyl-3-oxoglutarat ausgewählt ist.

8. Katalysator nach einem der Ansprüche 5 bis 7, wobei der Gehalt an organischer Verbindung zwischen 1 und 30 Gew.-%, bezogen auf das Gesamtgewicht des Katalysators, liegt.

9. Katalysator nach einem der Ansprüche 1 bis 8, der zumindest teilweise geschwefelt ist.

10. Verfahren zur Herstellung eines Katalysators nach einem der Ansprüche 1 bis 9, das folgende Schritte umfasst:

   a) man bringt mindestens einen Nickelvorläufer, einen Molybdänvorläufer und einen Wolframvorläufer und Phosphor mit einem Träger auf Basis von Aluminiumoxid oder Siliciumdioxid oder Siliciumdioxid-Aluminiumoxid in Kontakt, wodurch eine Katalysatorvorstufe erhalten wird,
   b) man trocknet die Katalysatorvorstufe aus Schritt a) bei einer Temperatur von weniger als 200 °C.

11. Verfahren zur Herstellung eines Katalysators nach Anspruch 10, das zusätzlich einen Schritt c) umfasst, bei dem man den in Schritt b) erhaltenen Katalysator bei einer Temperatur zwischen 200 °C und 550 °C calciniert.

12. Verfahren zur Herstellung eines Katalysators nach Anspruch 10 bis 11, das zusätzlich einen Schritt d) umfasst, bei dem man den in Schritt b) bzw. in Schritt c) erhaltenen Katalysator schwefelt.

13. Verwendung des Katalysators nach einem der Ansprüche 1 bis 9 bei einem Verfahren zum Hydrotreating und/oder Hydrocracking von Kohlenwasserstoffschnitten.

**Claims**

1. Catalyst comprising a support based on alumina or silica or silica-alumina, an active phase consisting of nickel, molybdenum and tungsten, and phosphorus, **characterized in that**:

   - the content of nickel, measured in the NiO form, is between 3% and 4% by weight, with respect to the total weight of the catalyst,
   - the content of molybdenum, measured in the $MoO_3$ form, is between 2% and 4% by weight, with respect to the total weight of the catalyst,
   - the content of tungsten, measured in the $WO_3$ form, is between 34% and 40% by weight, with respect to the total weight of the catalyst,
   - the content of phosphorus, measured in the $P_2O_5$ form, is between 3% and 4% by weight, with respect to the total weight of the catalyst,
   - the $WO_3/MoO_3$ molar ratio is between 5.3 and 12.4 mol/mol,
   - the $NiO/(WO_3 + MoO_3)$ molar ratio is between 0.20 and 0.33 mol/mol,
   - the $P_2O_5/(WO_3 + MoO_3)$ molar ratio is between 0.21 and 0.34 mol/mol.

2. Catalyst according to Claim 1, **characterized in that**:

   - the content of nickel, measured in the NiO form, is between 3.1% and 3.9% by weight, with respect to the total weight of the catalyst,

- the content of molybdenum, measured in the $MoO_3$ form, is between 2.2% and 3.8% by weight, with respect to the total weight of the catalyst,
- the content of tungsten, measured in the $WO_3$ form, is between 35% and 39.9% by weight, with respect to the total weight of the catalyst,
- the content of phosphorus, measured in the $P_2O_5$ form, is between 3.1% and 3.9% by weight, with respect to the total weight of the catalyst,
- the $WO_3/MoO_3$ molar ratio is between 5.7 and 11.1 mol/mol,
- the $NiO/(WO_3 + MoO_3)$ molar ratio is between 0.21 and 0.31 mol/mol,
- the $P_2O_5/(WO_3 + MoO_3)$ molar ratio is between 0.22 and 0.33 mol/mol.

3. Catalyst according to Claim 2, **characterized in that**:

- the content of nickel, measured in the NiO form, is between 3.2% and 3.8% by weight, with respect to the total weight of the catalyst,
- the content of molybdenum, measured in the $MoO_3$ form, is between 2.5% and 3.5% by weight, with respect to the total weight of the catalyst,
- the content of tungsten, measured in the $WO_3$ form, is between 36% and 39% by weight, with respect to the total weight of the catalyst,
- the content of phosphorus, measured in the $P_2O_5$ form, is between 3.2% and 3.8% by weight, with respect to the total weight of the catalyst,
- the $WO_3/MoO_3$ molar ratio is between 6.4 and 9.7 mol/mol,
- the $NiO/(WO_3 + MoO_3)$ molar ratio is between 0.22 and 0.30 mol/mol,
- the $P_2O_5/(WO_3 + MoO_3)$ molar ratio is between 0.23 and 0.32 mol/mol.

4. Catalyst according to one of Claims 1 to 3, in which the density of metals from group VIb, expressed as number of atoms of said metals per unit area of the catalyst, is between 5 and 12 atoms of the metals from group VIb per $nm^2$ of catalyst.

5. Catalyst according to one of Claims 1 to 4, which additionally contains an organic compound containing oxygen and/or nitrogen and/or sulfur.

6. Catalyst according to Claim 5, in which the organic compound is chosen from a compound comprising one or more chemical functional groups chosen from a carboxyl, alcohol, thiol, thioether, sulfone, sulfoxide, ether, aldehyde, ketone, ester, carbonate, amine, nitrile, imide, oxime, urea or amide functional group or also compounds including a furan ring or also sugars.

7. Catalyst according to Claim 6, in which the organic compound is chosen from $\gamma$-valerolactone, 2-acetylbutyrolactone, triethylene glycol, diethylene glycol, ethylene glycol, ethylenediaminetetraacetic acid (EDTA), maleic acid, malonic acid, citric acid, acetic acid, oxalic acid, gluconic acid, glucose, fructose, sucrose, sorbitol, xylitol, $\gamma$-ketovaleric acid, a di($C_1$-$C_4$ alkyl) succinate and more particularly dimethyl succinate, dimethylformamide, 1-methyl-2-pyrrolidinone, propylene carbonate, 2-methoxyethyl 3-oxobutanoate, bicine, tricine, 2-furaldehyde (also known under the name furfural), 5-hydroxymethylfurfural, 2-acetylfuran, 5-methyl-2-furaldehyde, ascorbic acid, butyl lactate, ethyl lactate, butyl butyryllactate, ethyl 3-hydroxybutanoate, ethyl 3-ethoxypropanoate, 2-ethoxyethyl acetate, 2-butoxyethyl acetate, 2-hydroxyethyl acrylate, 1-vinyl-2-pyrrolidinone, 1,3-dimethyl-2-imidazolidinone, 1,5-pentanediol, 1-(2-hydroxyethyl)-2-pyrrolidinone, 1-(2-hydroxyethyl)-2,5-pyrrolidinedione, 5-methyl-2(3H)-furanone, 1-methyl-2-piperidinone, 4-aminobutanoic acid, butyl glycolate, ethyl 2-mercaptopropanoate, ethyl 4-oxopentanoate, diethyl maleate, dimethyl maleate, dimethyl fumarate, diethyl fumarate, dimethyl adipate and dimethyl 3-oxoglutarate.

8. Catalyst according to one of Claims 5 to 7, in which the content of organic compound is between 1% and 30% by weight, with respect to the total weight of the catalyst.

9. Catalyst according to one of Claims 1 to 8, being at least partially sulfided.

10. Process for the preparation of a catalyst according to one of Claims 1 to 9, comprising the following stages:

a) at least one nickel precursor, one molybdenum precursor and one tungsten precursor and phosphorus are brought into contact with a support based on alumina or silica or silica-alumina, so as to obtain a catalyst precursor,

b) said catalyst precursor resulting from stage a) is dried at a temperature of less than 200°C.

11. Process for the preparation of a catalyst according to Claim 10, additionally comprising a stage c) in which the catalyst obtained in stage b) is calcined at a temperature of between 200°C and 550°C.

12. Process for the preparation of a catalyst according to either of Claims 10 and 11, additionally comprising a stage d) in which the catalyst obtained in stage b) or in stage c) is sulfided.

13. Use of the catalyst according to one of Claims 1 to 9 in a process for the hydrotreating and/or hydrocracking of hydrocarbon cuts.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6162350 A
- US 6299760 B
- WO 0041810 A
- US 6566296 B
- US 20170165644 A
- US 2019126254 A
- US 8697598 B

**Littérature non-brevet citée dans la description**

- **SOLMANOV et al.** *Russian Journal of Applied Chemistry,* 2018, vol. 91 (8), 1363-1369
- CRC Handbook of Chemistry and Physics. 2000
- **BRUNAUER-EMMETT-TELLER.** *The Journal of American Society,* 1938, vol. 60, 309
- **JEAN CHARPIN ; BERNARD RASNEUR.** *Techniques de l'ingénieur, traité analyse et caractérisation,* 1050-1055
- **ROUQUEROL F. ; ROUQUEROL J. ; SINGH K.** Adsorption by Powders & Porous Solids : Principle, methodology and applications. Academic Press, 1999
- **C. REICHARDT.** Solvents and Solvent Effects in Organic Chemistry. Wiley-VCH, 2003, 472-474
- *ULLMANS ENCYCLOPEDIA OF INDUSTRIAL CHEMISTRY,* 1991, vol. A 18, 61-64